(19) Europäisches Patentamt
European Patent Office
Office européen des brevets

(11) EP 4 678 669 A1

(12) EUROPEAN PATENT APPLICATION
published in accordance with Art. 153(4) EPC

(43) Date of publication:
**14.01.2026 Bulletin 2026/03**

(21) Application number: **24767235.5**

(22) Date of filing: **08.03.2024**

(51) International Patent Classification (IPC):
***C08F 290/06*** *(2006.01)* ***B41J 2/01*** *(2006.01)*
***C08F 12/12*** *(2006.01)* ***C09D 11/023*** *(2014.01)*
***C09D 11/30*** *(2014.01)* ***C09D 11/102*** *(2014.01)*

(52) Cooperative Patent Classification (CPC):
**B41J 2/01; C08F 12/12; C08F 290/06; C09D 11/023; C09D 11/102; C09D 11/30**

(86) International application number:
**PCT/JP2024/008930**

(87) International publication number:
**WO 2024/185869 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.03.2023 JP 2023036778**

(71) Applicant: **Nippon Shokubai Co., Ltd.**
**Osaka-shi, Osaka 541-0043 (JP)**

(72) Inventors:
- **NAKAMOTO, Keiichi**
  **Suita-shi, Osaka 564-0034 (JP)**
- **IKEMOTO, Wataru**
  **Suita-shi, Osaka 564-0034 (JP)**
- **ITO, Takumi**
  **Suita-shi, Osaka 564-0034 (JP)**
- **NISHIDA, Toshifumi**
  **Suita-shi, Osaka 564-0034 (JP)**

(74) Representative: **Müller-Boré & Partner Patentanwälte PartG mbB**
**Friedenheimer Brücke 21**
**80639 München (DE)**

# (54) POLYMER, RESIN PARTICLES INCLUDING SAID POLYMER, AQUEOUS DISPERSION, INK, METHOD FOR PRODUCING PRINTED OBJECT USING SAID INK, ARTICLE WITH FIXED IMAGE, AND POLYMERIZABLE MONOMER

(57) An object is to provide a polymer excellent in adhesion to a base material made of a polyolefin. The object is achieved by using a polymer including, as a constituent unit, a structure derived from a polymerizable monomer (M) represented by Formula (1) described below: (In the formula, $A^1$ represents a hydrocarbon group containing two or more aromatic ring skeletons, the hydrocarbon group optionally has a substituent, and the substituent is a nonionic substituent. $A^2$ represents an alkylene chain having from 1 to 10 carbons, and the alkylene chain optionally has a substituent. A plurality of A2 may be the same or different. n is an integer of from 3 to 100. $X^1$ represents a group having an ethylenically unsaturated double bond.)

$$A^1\text{-}(OA^2)_n\text{-}O\text{-}X^1 \qquad (1)$$

EP 4 678 669 A1

## Description

### Technical Field

The present invention relates to a polymer, resin particles containing the polymer, an aqueous dispersion, an ink, a method for producing a printed matter using the ink, an article with a fixed image, and a polymerizable monomer.

### Background Art

Known polyolefins such as polypropylene are excellent in processability and inexpensive as compared to other polymer materials, and thus they are processed into the form of a film or a fiber and used as a soft packaging film, a nonwoven fabric, or the like. The soft packaging film is typically used after being subjected to a printing process such as front printing or back printing. Soft packaging films obtained by performing back printing and laminating are frequently used from the viewpoints of the beauty of printing, suppression of ink fall-off, durability of a printing film, and the like. However, from the viewpoint of improving work efficiency and reducing environmental and economic burdens by not using an adhesive or a solvent for lamination, a shift to front printing has been desired. In addition, in printing on soft packaging films, gravure printing and flexographic printing have been the mainstream, but inkjet printing capable of coping with small amounts and various types has started to be adopted. From the viewpoint of reducing the load on the environment, the ink used in these types of printing is shifting from a solvent system to a water system, and various aqueous ink compositions capable of forming a printed image on soft packaging films and the like through inkjet printing have been proposed.
For example, Patent Document 1 describes an aqueous inkjet ink composition containing a binder resin composition for an aqueous inkjet ink characterized by containing specific core-shell type resin fine particles and a specific moisturizing solvent.
Patent Document 2 describes an ink composition containing a pigment, specific self-dispersible resin particles, at least two types of nonionic surfactants having HLB in specific different ranges, a water-soluble organic solvent, and water.
Patent Document 3 describes an aqueous inkjet ink composition containing a pigment, a specific anionic group-containing resin, an emulsion, an acetylene diol surfactant, a specific silicone surfactant, a water-soluble solvent, and water.

### Citation List

#### Patent Document

Patent Document 1: JP 2012-201692 A
Patent Document 2: JP 2013-18951 A
Patent Document 3: JP 2016-222754 A

### Summary of Invention

#### Technical Problem

However, it cannot be said that the adhesion of a printed image with respect to a polyolefin base material such as a polypropylene film is sufficient even when inkjet printing is performed on the base material using the ink compositions described in these documents.
The present inventors have intensively studied focusing on a resin component contained in ink to develop an ink with which printing with excellent adhesion can be performed on a base material made of a polyolefin. As a result, the present inventors have found that a polymer containing a structure derived from a specific polymerizable monomer as a constituent unit exhibits excellent adhesion to a polyolefin, and further, an ink containing the polymer enables printing exhibiting excellent adhesion to a polyolefin. Thus, an object of the present invention is to provide a polymer having excellent adhesion to a base material made of a polyolefin and a compound constituting the polymer.

#### Solution to Problem

The present invention is as follows.

[1] A polymer including, as a constituent unit, a structure derived from a polymerizable monomer (M) represented by

Formula (1) described below:
[Chem. 1]

$$A^1\text{-}(OA^2)_n\text{-}O\text{-}X^1 \qquad (1)$$

[wherein

$A^1$ represents a hydrocarbon group containing two or more aromatic ring skeletons, the hydrocarbon group optionally has a substituent, and the substituent is a nonionic substituent,
$A^2$ represents an alkylene chain having from 1 to 10 carbons, the alkylene chain optionally has a substituent, and a plurality of $A^2$ may be the same or different,
n is an integer of from 3 to 100, and
$X^1$ represents a group having an ethylenically unsaturated double bond].

[2] The polymer according to [1], wherein $A^1$ is any of groups represented by Formulae (1-a) to (1-f) described below:

[Chem. 2]

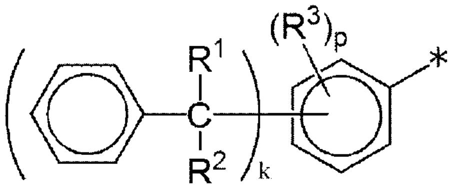

(1-a)

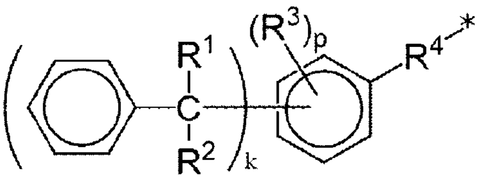

(1-b)

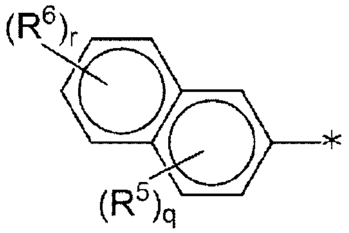

(1-c)

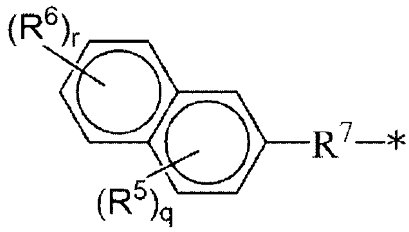

(1-d)

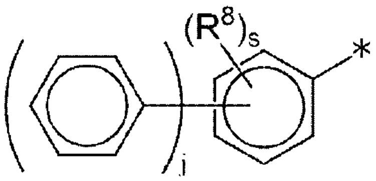

(1-e)

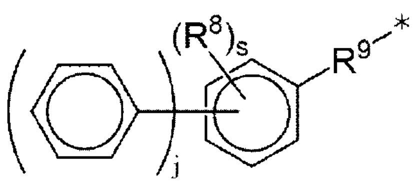

(1-f)

[wherein

$R^1$ and $R^2$ each independently represent a hydrogen atom or a monovalent aliphatic hydrocarbon group,
$R^3$, $R^5$, $R^6$, and $R^8$ each independently represent a monovalent aliphatic hydrocarbon group,
$R^4$, $R^7$, and $R^9$ each independently represent a divalent aliphatic hydrocarbon group,
k represents an integer of from 1 to 5, p represents an integer of from 0 to 4, and k + p is an integer of from 1 to 5,
q represents an integer of from 0 to 3, and r represents an integer of from 0 to 4,
s represents an integer of from 0 to 4, j represents an integer of from 1 to 5, and s + j is an integer of from 1 to 5, and
* represents a binding site with terminal O (oxygen atom) in "$(OA^2)_n$" in Formula (1)].

[3] The polymer according to [1] or [2], wherein the structure derived from the polymerizable monomer (M) satisfies Formula (f1-1) described below:

$$(E_M + E_{P8}) - (E_{MP}) < -80 \text{ kJ/mol} \quad (f1\text{-}1)$$

[wherein

$E_M$ is an absolute value of a zero-point energy of a structure molecule (Ip), $E_{P8}$ is an absolute value of a zero-point energy of a propylene octamer, and $E_{MP}$ is an absolute value of a zero-point energy of an association of the structure molecule (Ip) and the propylene octamer,

the structure molecule (Ip) has a structure represented by Formula (1-1) described below when the polymerizable monomer (M) is represented by Formula (1),

each zero-point energy is a zero-point energy obtained by a calculation method applying B3LYP as a functional of a density functional method, 6-31G(d, p) as a basis function, and dispersion force correction (GD3BJ keyword) using a Gaussian 16 program available from Gaussian Inc.]

[Chem. 3]

$$A^1\text{-}(OA^2)_2\text{-}OCH_3 \quad (1\text{-}1)$$

[wherein $A^1$ and $A^2$ are the same as $A^1$ and $A^2$ in Formula (1), respectively].

[4] Resin particles containing the polymer described in any of [1] to [3].

[5] The resin particles according to [4], wherein the resin particles are single-layer particles containing the polymer, or particles having a core-shell structure containing the polymer in a shell layer.

[6] An aqueous dispersion containing the resin particles described in [4] or [5].

[7] An ink containing a binder and a solvent, wherein the binder contains the polymer described in any of [1] to [3].

[8] The ink according to [7], wherein the binder is resin particles containing the polymer.

[9] A method for producing a printed matter, the printed matter including an image printed on a base material, the method including an image formation step of forming an image by adhering the ink described in [7] or [8] to a base material.

[10] An article with a fixed image in which an image containing a pigment and a resin is fixed to a part or a whole of a base material, wherein the resin contains the polymer described in any of [1] to [3].

[11] A compound represented by Formula (2) described below:

[Chem. 4]

$$A^3\text{-}(OA^4)_m\text{-}O\text{-}X^2 \quad (2)$$

[wherein

$A^3$ represents a hydrocarbon group containing two or more aromatic ring skeletons, the hydrocarbon group optionally has a substituent, and the substituent is a nonionic substituent,

$A^4$ represents an alkylene chain having from 1 to 10 carbons, the alkylene chain optionally has a substituent, and a plurality of $A^4$ may be the same or different,

m is an integer of from 3 to 100, and

$X^2$ represents a group having an ethylenically unsaturated double bond].

[12] The compound according to [11], wherein the compound satisfies Formula (f2-1) described below:

$$(E_M + E_{P8}) - (E_{MP}) < -80 \text{ kJ/mol} \quad (f2\text{-}1)$$

[wherein

$E_M$ is an absolute value of a zero-point energy of a structure molecule (I), $E_{P8}$ is an absolute value of a zero-point energy of a propylene octamer, and $E_{MP}$ is an absolute value of a zero-point energy of an association of the structure molecule (I) and the propylene octamer,

the structure molecule (I) has a structure represented by Formula (2-1) described below when the compound is represented by Formula (2),

each zero-point energy is a zero-point energy obtained by a calculation method applying B3LYP as a functional of a density functional method, 6-31G(d, p) as a basis function, and dispersion force correction (GD3BJ keyword) using a Gaussian 16 program available from Gaussian Inc.]

[Chem. 5]

$$A^3\text{-}(OA^4)_2\text{-}OCH_3 \qquad (2\text{-}1)$$

[wherein $A^3$ and $A^4$ are the same as $A^3$ and $A^4$ in Formula (2), respectively].

[13] The compound according to [11] or [12], wherein $A^3$ is any of groups represented by Formulae (1-a) to (1-f) described below:

[Chem. 6]

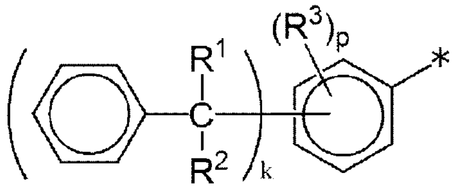

(1-a)

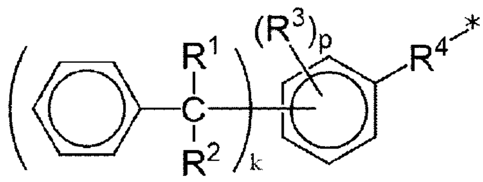

(1-b)

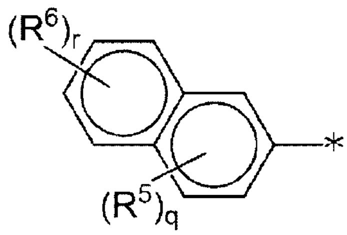

(1-c)

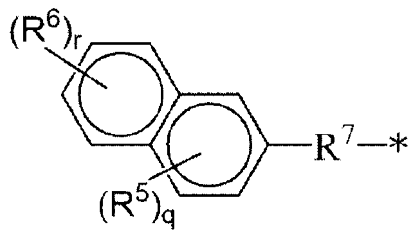

(1-d)

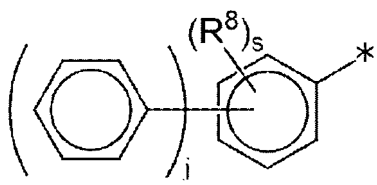

(1-e)

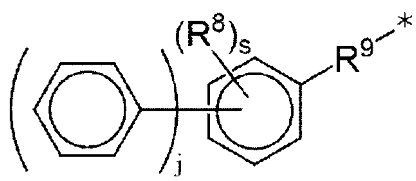

(1-f)

[wherein

$R^1$ and $R^2$ each independently represent a hydrogen atom or a monovalent aliphatic hydrocarbon group,
$R^3$, $R^5$, $R^6$, and $R^8$ each independently represent a monovalent aliphatic hydrocarbon group,
$R^4$, $R^7$, and $R^9$ each independently represent a divalent aliphatic hydrocarbon group,
k represents an integer of from 1 to 5, p represents an integer of from 0 to 4, and k + p is an integer of from 1 to 5,
q represents an integer of from 0 to 3, and r represents an integer of from 0 to 4,
s represents an integer of from 0 to 4, j represents an integer of from 1 to 5, and s + j is an integer of from 1 to 5, and
* represents a binding site with terminal O (oxygen atom) in "$(OA^4)_m$" in Formula (2)].

Advantageous Effects of Invention

The polymer of the present invention has excellent adhesion to a base material made of a polyolefin because of the above-described configuration. Thus, an image excellent in adhesion to a polyolefin base material such as a film made

of a polyolefin or a fabric made of polyolefin fibers can be printed by using the ink (preferably, aqueous ink) containing the polymer. In particular, even in the case of an aqueous ink, adhesion to a polyolefin base material can be enhanced by using the polymer of the present invention as a resin component.

## Description of Embodiments

Hereinafter, the present invention will be described in detail.

A combination of two or more of the preferred embodiments of the present invention described below is also a preferred embodiment of the present invention.

In the present specification, "(meth)acrylate" means "acrylate" or "methacrylate", "(meth)acryl" means "acryl" or "methacryl", and "(meth)acryloyl" means "acryloyl" or "methacryloyl". The (meth)acrylate may be referred to as (meth) acrylic acid ester.

In the present specification, a description of "from A to B" indicating a numerical range means "A or more and B or less" unless otherwise specified.

### 1. Polymer

The polymer of the present disclosure is characterized by containing, as a constituent unit, a structure (M) derived from a polymerizable monomer (M) represented by Formula (1) described below. The polymer of the present disclosure may be referred to as polymer (Pm).

[Chem. 7]

$$A^1\text{-}(OA^2)_n\text{-}O\text{-}X^1 \qquad (1)$$

In Formula (1), $A^1$ represents a hydrocarbon group containing two or more aromatic ring skeletons, the hydrocarbon group optionally has a substituent, and the substituent is a nonionic substituent. $A^2$ represents an alkylene chain having from 1 to 10 carbons, and the alkylene chain optionally has a substituent. A plurality of $A^2$ may be the same or different. n is an integer of from 3 to 100. $X^1$ represents a group having an ethylenically unsaturated double bond.

### Polymerizable monomer (M)

The polymerizable monomer (M) will be described. The polymerizable monomer (M) is represented by Formula (1). In Formula (1), $A^1$ represents a polycyclic phenyl group, and the polycyclic phenyl group means a hydrocarbon group containing two or more aromatic ring skeletons. In the present specification, the "hydrocarbon group containing two or more aromatic ring skeletons" may be referred to as "polycyclic phenyl group". In the present invention, a structure in which two aromatic hydrocarbons having a monocyclic structure are fused includes two aromatic ring skeletons. Thus, in the present invention, containing two or more aromatic ring skeletons means that at least one of the following cases are satisfied: two or more aromatic hydrocarbon skeletons having a monocyclic structure such as a benzene ring (i.e., an unsaturated hydrocarbon ring exhibiting aromaticity by itself) are contained; and at least one aromatic hydrocarbon skeleton having a fused ring structure (i.e., a fused aromatic ring exhibiting aromaticity through fusion of two or more unsaturated hydrocarbon rings) are contained.

Thus, examples of the polycyclic phenyl group include a form having two or more aromatic hydrocarbon skeletons having a monocyclic structure, a form having one or two or more fused cyclic aromatic hydrocarbon skeletons, and a form having one or two or more aromatic hydrocarbon skeletons having a monocyclic structure and one or two or more aromatic hydrocarbon skeletons having a fused ring structure. The aromatic ring skeletons contained in the polycyclic phenyl group may be the same or different.

The polycyclic phenyl group may be a hydrocarbon group containing only the aromatic ring skeleton (i.e., a hydrocarbon group containing only an unsaturated hydrocarbon ring exhibiting aromaticity by itself or through fusion), or may have a hydrocarbon group other than the aromatic ring skeleton (i.e., a hydrocarbon group other than the unsaturated hydrocarbon ring exhibiting aromaticity by itself or through fusion).

Examples of the hydrocarbon group other than the aromatic ring skeleton include monovalent or divalent or higher valent aliphatic hydrocarbon groups, and examples thereof include an alkyl group, an alkylene group, an alkenyl group, an alkenylene group, and an alkynyl group having a chain structure or a cyclic structure. Among them, an alkyl group is preferred.

More specifically, the aliphatic hydrocarbon group may be a saturated aliphatic hydrocarbon group or an unsaturated aliphatic hydrocarbon group. The aliphatic hydrocarbon group may have a chain structure (aliphatic chain hydrocarbon group) or a cyclic structure (aliphatic cyclic hydrocarbon group).

Examples of the saturated aliphatic hydrocarbon group having a monovalent chain structure include alkyl groups

having a chain structure such as: a linear alkyl group such as a methyl group, an ethyl group, an n-propyl group, an n-butyl group, an n-pentyl group, an n-hexyl group, an n-heptyl group, an n-octyl group, an n-nonyl group, an n-decyl group, or an n-dodecyl group; and a branched alkyl group such as an isopropyl group, an isobutyl group, a tert-butyl group, an isopentyl group, a neopentyl group, a 2,3-dimethyl-2-butyl group, a 3-methylheptyl group, or 2-ethylhexyl.

Examples of the saturated aliphatic hydrocarbon group having an n-valent (n = an integer of 2 or more) chain structure include groups in which (n - 1) hydrogen atoms constituting the saturated aliphatic hydrocarbon group having a monovalent chain structure are replaced by bonds, and specific examples thereof include alkylene groups having a chain structure such as a methylene group, an ethylene-1,1-diyl group, an ethylene-1,2-diyl group, a propane-1,2-diyl group, a propane-1,3-diyl group, a butane-1,4-diyl group, a pentane-1,5-diyl group, and a hexane-1,6-diyl group.

The number of carbons (for example, when the alkyl group or the alkylene group has a chain structure, the number of carbons constituting the alkyl group or the alkylene group) of the saturated aliphatic hydrocarbon group having a monovalent or divalent or higher valent chain structure is preferably from 1 to 18, more preferably from 1 to 12, still more preferably from 1 to 6, and still more preferably from 1 to 3.

Examples of the saturated aliphatic hydrocarbon group having a monovalent cyclic structure include alkyl groups having a cyclic structure (i.e., cycloalkyl groups) such as a cyclopropyl group, a cyclopentyl group, a cyclohexyl group, a 3-methylcyclohexyl group, a 4-methylcyclohexyl group, a 4-ethylcyclohexyl group, a cycloheptyl group, and a cyclooctyl group.

Examples of the saturated aliphatic hydrocarbon group having an n-valent (n = an integer of 2 or more) cyclic structure include groups in which (n - 1) hydrogen atoms constituting the saturated aliphatic hydrocarbon group having a monovalent cyclic structure are replaced by bonds, and specific examples thereof include divalent saturated alicyclic hydrocarbon groups such as a cyclohexyl-1,2-diyl group and a cyclohexyl-1,4-diyl group; trivalent saturated alicyclic hydrocarbon groups such as a cyclohexyl-1,3,5-triyl group; and tetravalent saturated alicyclic hydrocarbon groups such as a cyclohexyl-1,2,4,5-tetrayl group.

The number of carbons of the saturated aliphatic hydrocarbon group having a monovalent or divalent or higher valent cyclic structure (for example, when the alkyl group has a cyclic structure, the number of carbons constituting the alkyl group) is preferably from 3 to 18, more preferably from 4 to 12, still more preferably from 5 to 8, and particularly preferably 6 (specifically, a cyclohexyl group or the like).

Examples of the unsaturated aliphatic hydrocarbon group having a monovalent chain structure include alkenyl groups having a chain structure such as a vinyl group, an n-propenyl group, an isopropenyl group, a 1-butenyl group, a 2-butenyl group, a 1-pentenyl group, a 2-pentenyl group, a 2-methyl-1-butenyl group, a 2-methyl-2-butenyl group, and a 3-methyl-1-butenyl group; and alkynyl groups having a chain structure such as an ethynyl group, a 2-propynyl group, a 3-butynyl group, a 4-pentynyl group, a 1-methyl-3-butynyl group, a 1,1-dimethyl-2-propynyl group, and a 6-heptynyl group.

Examples of the unsaturated aliphatic hydrocarbon group having an n-valent (n = an integer of 2 or more) chain structure include groups in which (n - 1) hydrogen atoms constituting the unsaturated aliphatic hydrocarbon group having a monovalent chain structure are replaced by bonds.

The number of carbons of the unsaturated aliphatic hydrocarbon group having a monovalent or divalent or higher valent chain structure is preferably from 2 to 18, more preferably from 2 to 12, and still more preferably from 2 to 6.

Examples of the unsaturated aliphatic hydrocarbon group having a monovalent cyclic structure include alkenyl groups having a cyclic structure (i.e., cycloalkenyl group) such as a cyclohexenyl group, a cycloheptenyl group, or a cyclooctenyl group.

Examples of the n-valent (n = an integer of 2 or more) unsaturated aliphatic hydrocarbon group having a cyclic structure include groups in which (n - 1) hydrogen atoms constituting the unsaturated aliphatic hydrocarbon group having a monovalent cyclic structure are replaced by bonds.

The number of carbons of the unsaturated aliphatic hydrocarbon group having a monovalent or divalent or higher valent cyclic structure is preferably from 3 to 18, more preferably from 4 to 12, and still more preferably from 5 to 8.

The aromatic hydrocarbon skeleton having a monocyclic structure is not particularly limited as long as it has a structure derived from an aromatic hydrocarbon having a monocyclic structure, but is preferably a 4 to 7-membered aromatic hydrocarbon ring, and more preferably a 6-membered aromatic hydrocarbon ring, i.e., a benzene ring. The monocyclic aromatic hydrocarbon is preferably a 4 to 7-membered aromatic hydrocarbon, and more preferably contains a 6-membered ring, i.e., a benzene ring. When the polycyclic phenyl group has two or more aromatic hydrocarbon skeletons having a monocyclic structure (i.e., unsaturated hydrocarbon rings each exhibiting aromaticity by itself), the polycyclic phenyl group is not particularly limited as long as it does not have an aromatic hydrocarbon skeleton having a fused ring structure (i.e., as long as two or more unsaturated hydrocarbon rings are not fused). Usually, in a form having two or more aromatic hydrocarbon skeletons having a monocyclic structure, it is preferred that the aromatic hydrocarbon skeletons having a monocyclic structure (i.e., an unsaturated hydrocarbon ring exhibiting aromaticity by itself) are linked by a linking group to form a polycyclic phenyl group. As the linking group, a single bond or the divalent or higher valent hydrocarbon group other than the aromatic ring skeleton is preferred, a single bond or a divalent or higher valent aliphatic hydrocarbon group is more preferred, a single bond or a divalent aliphatic hydrocarbon group is still more preferred, a single bond or an

alkylene group is further still more preferred, and a single bond or a chain alkylene group is particularly preferred.

In the form in which the polycyclic phenyl group has two or more aromatic hydrocarbon skeletons having a monocyclic structure (i.e., unsaturated hydrocarbon rings each exhibiting aromaticity by itself), the number of unsaturated hydrocarbon rings each exhibiting aromaticity by itself possessed by the polycyclic phenyl group is preferably from 2 to 6, more preferably from 2 to 4, and still more preferably from 3 to 4.

The aromatic hydrocarbon skeleton having a fused ring structure is not particularly limited as long as it has a structure exhibiting aromaticity formed through ring fusion of two or more unsaturated hydrocarbon rings, but is preferably a structure derived from a fused cyclic aromatic hydrocarbon obtained through fusion of an aromatic hydrocarbon having a monocyclic structure, more preferably a structure derived from a fused cyclic aromatic hydrocarbon obtained through fusion of an aromatic hydrocarbon ring having a 4 to 7-membered monocyclic structure, and still more preferably a structure derived from a fused cyclic aromatic hydrocarbon obtained through fusion of a 6-membered aromatic hydrocarbon ring (i.e., a benzene ring).

Preferred examples of the fused cyclic aromatic hydrocarbon (i.e., an aromatic hydrocarbon skeleton of a fused ring structure) include a structure in which only a 6-membered aromatic hydrocarbon ring such as naphthalene, anthracene, pentacene, benzopyrene, chrysene, pyrene, triphenylene, cholannulene, coronene, obalene, or kekrene is fused; and a structure in which a 5-membered unsaturated hydrocarbon ring such as azulene and a 7-membered unsaturated hydrocarbon ring are fused. Among them, those containing a structure derived from a 6-membered aromatic hydrocarbon ring are more preferred, and those having a structure in which only a 6-membered aromatic hydrocarbon ring is fused are still more preferred.

In particular, the aromatic hydrocarbon skeleton of the fused ring structure preferably has a structure in which from 2 to 12 benzene rings are fused, more preferably a structure in which from 2 to 5 benzene rings are fused, and still more preferably a structure in which 2 benzene rings are fused.

When the polycyclic phenyl group has an aromatic hydrocarbon skeleton of a fused ring structure (i.e., a structure exhibiting aromaticity formed through fusion of two or more unsaturated hydrocarbon rings), the number of aromatic hydrocarbon skeletons of the fused ring structure of the polycyclic phenyl group is preferably from 1 to 3, and more preferably 1.

The polycyclic phenyl group represented by $A^1$ is preferably a monovalent group. The polycyclic phenyl group may be bound to the oxygen atom in Formula (1) by a carbon atom constituting the aromatic ring skeleton (i.e., an unsaturated hydrocarbon ring exhibiting aromaticity by itself or through fusion), or may be bound to the oxygen atom in Formula (1) by a carbon atom constituting the aliphatic hydrocarbon group such as an alkyl group or an alkylene group other than the aromatic ring skeleton.

The polycyclic phenyl group represented by $A^1$ may have a substituent, and the substituent is a nonionic substituent. That is, the polycyclic phenyl group does not have an anionic group.

The nonionic substituent refers to a nonionic substituent, and specific examples thereof include polyalkylene glycol groups such as a polyethylene glycol group and a polypropylene glycol group; halogen atoms such as a fluorine atom, a chlorine atom, a bromine atom, and an iodine atom; hydroxyl group; alkyl ether groups (preferably $C_{1-4}$ alkoxy groups) such as a methoxy group, an ethoxy group, a propoxy group, and a butoxy group; aryl ether groups such as a phenoxy group and a naphthoxy group (preferably $C_{6-15}$ aryloxy groups); and acyl groups such as an acetyl group and a benzoyl group (preferably, alkylcarbonyl group in which alkyl group has from 1 to 4 carbons or arylcarbonyl group in which aryl group has from 6 to 15 carbons).

The nonionic substituent may be directly bound to an aromatic ring skeleton constituting the polycyclic phenyl group (i.e., an unsaturated hydrocarbon ring exhibiting aromaticity by itself or through fusion), or may be bound to a hydrocarbon group other than the aromatic ring skeleton (e.g., the aliphatic hydrocarbon group such as an alkyl group or an alkylene group).

In particular, the nonionic substituent bound to a hydrocarbon group other than the aromatic ring skeleton (e.g., the aliphatic hydrocarbon group such as an alkyl group or an alkylene group) is preferably a halogen atom, a hydroxyl group, an alkyl ether group, an aryl ether group, or an acyl group, and more preferably a halogen atom, a hydroxyl group, a $C_{1-4}$ alkoxy group, a $C_{6-15}$ aryloxy group, an alkylcarbonyl group in which the alkyl group has from 1 to 4 carbons, or an arylcarbonyl group in which the aryl group has from 6 to 15 carbons. Among the halogen atoms, a chlorine atom, a bromine atom, and a fluorine atom are preferred, and a chlorine atom is more preferred.

The polycyclic phenyl group represented by $A^1$ is:

preferably, a hydrocarbon group $A^1$ having two or more benzene rings each optionally having a monovalent aliphatic hydrocarbon group, wherein the benzene rings are linked by single bonds or divalent aliphatic hydrocarbon groups, and any one of the benzene rings is bound to the oxygen in Formula (1) directly or via a divalent aliphatic hydrocarbon group, or a hydrocarbon group B1 having one fused ring in which from 2 to 12 benzene rings are fused, wherein the fused ring optionally has a monovalent aliphatic hydrocarbon group, and wherein the fused ring is bound to the oxygen atoms in Formula (1) directly or via a divalent aliphatic hydrocarbon group;

more preferably, a hydrocarbon group A2 having from 2 to 6 benzene rings optionally having an alkyl group, wherein the benzene rings are linked by single bonds or alkylene groups, and any one of the benzene rings is bound to the oxygen atoms in Formula (1) directly or via a divalent alkylene group, or a hydrocarbon group B2 having one fused ring in which from 2 to 5 benzene rings are fused, wherein the fused ring optionally has alkyl groups, and the fused ring is bound to the oxygen atoms in Formula (1) directly or via an alkylene group;

still more preferably, a hydrocarbon group A3 having from 2 to 6 benzene rings which optionally have an alkyl group having a chain structure, wherein the benzene rings are linked by single bonds or an alkylene group having a chain structure, and any one of the benzene rings is bound to the oxygen atom in Formula (1) directly or via a divalent alkylene group having a chain structure, or a hydrocarbon group B3 having one fused ring wherein from 2 to 5 benzene rings are fused and the fused ring optionally has an alkyl group having a chain structure, and the fused ring is bound to the oxygen atoms in Formula (1) directly or via an alkylene group having a chain structure.

Each of the hydrocarbon group A1, the hydrocarbon group B1, the hydrocarbon group A2, the hydrocarbon group B2, the hydrocarbon group A3, and the hydrocarbon group B3 may have the nonionic substituent exemplified above, but preferably they do not have a nonionic substituent.

The polycyclic phenyl group represented by $A^1$ is more preferably, for example, at least one selected from the group consisting of structures represented by Formulae (1-a) to (1-f) described below.

[Chem. 8]

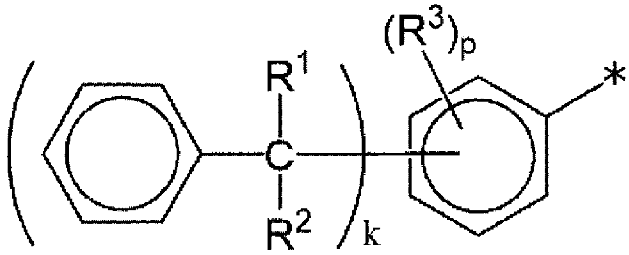

(1-a)

In Formula (1-a), $R^1$ and $R^2$ each independently represent a hydrogen atom or a monovalent aliphatic hydrocarbon group, and $R^3$ each independently represents a monovalent aliphatic hydrocarbon group. k represents an integer of from 1 to 5, and p represents an integer of from 0 to 4. k + p is an integer of from 1 to 5. * represents a binding site with terminal O (oxygen atom) in "$(OA^2)_n$" in Formula (1).

Examples of the monovalent aliphatic hydrocarbon group represented by $R^1$, $R^2$, and $R^3$ include the monovalent aliphatic hydrocarbon groups described above (e.g., an alkyl group, an alkenyl group, and an alkynyl group). Among them, an alkyl group is preferred, an alkyl group having from 1 to 18 carbons is more preferred, an alkyl group having from 1 to 12 carbons is still more preferred, an alkyl group having from 1 to 6 carbons is further still more preferred, and an alkyl group having from 1 to 3 carbons is particularly preferred. k is preferably from 1 to 3, and more preferably from 2 to 3. p is preferably from 0 to 1. The alkyl group is preferably an alkyl group having a chain structure, and the preferred range of the number of carbons in the alkyl group having a chain structure is the same as the preferred range of the number of carbons in the aforementioned alkyl group.

In Formula (1-a),

preferably, $R^1$ and $R^2$ are a hydrogen atom or an alkyl group, $R^3$ is an alkyl group, k is an integer of from 1 to 5, and p is an integer of from 0 to 4 (where k + p is an integer of from 1 to 5),

more preferably, $R^1$ is a hydrogen atom, $R^2$ is an alkyl group, $R^3$ is an alkyl group, k is an integer of from 1 to 3, and p is an integer of from 0 to 1,

still more preferably, $R^1$ is a hydrogen atom, $R^2$ is a $C_{1-3}$ alkyl group, $R^3$ is a $C_{1-12}$ alkyl group, k is an integer of from 1 to 3, and p is an integer of from 0 to 1.

[Chem. 9]

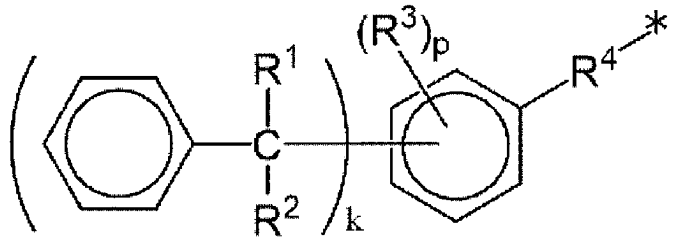

(1-b)

In Formula (1-b), $R^1$, $R^2$, $R^3$, k, p, and * are the same as $R^1$, $R^2$, $R^3$, k, p, and * in Formula (1-a), respectively, including preferred embodiments. $R^4$ represents a divalent aliphatic hydrocarbon group.

Examples of the divalent aliphatic hydrocarbon group represented by $R^4$ include the divalent aliphatic hydrocarbon groups described above (e.g., an alkylene group, a divalent saturated alicyclic hydrocarbon group, and the like). Among them, an alkylene group is preferred, an alkylene group having from 1 to 18 carbons is more preferred, an alkylene group having from 1 to 12 carbons is still more preferred, an alkylene group having from 1 to 6 carbons is further still more preferred, and an alkylene group having from 1 to 3 carbons is particularly preferred.

In Formula (1-b),

preferably, $R^1$ and $R^2$ are a hydrogen atom or an alkyl group, $R^3$ is an alkyl group, $R^4$ is an alkylene group, k is an integer of from 1 to 5, and p is an integer of from 0 to 4 (where k + p is an integer of from 1 to 5),
more preferably, $R^1$ is a hydrogen atom, $R^2$ is an alkyl group, $R^3$ is an alkyl group, $R^4$ is an alkylene group, k is an integer of from 1 to 3, and p is an integer of from 0 to 1,
still more preferably, $R^1$ is a hydrogen atom, $R^2$ is a $C_{1-3}$ alkyl group, $R^3$ is a $C_{1-12}$ alkyl group, $R^4$ is a $C_{1-12}$ alkylene group, k is an integer of from 1 to 3, and p is an integer of from 0 to 1.

[Chem. 10]

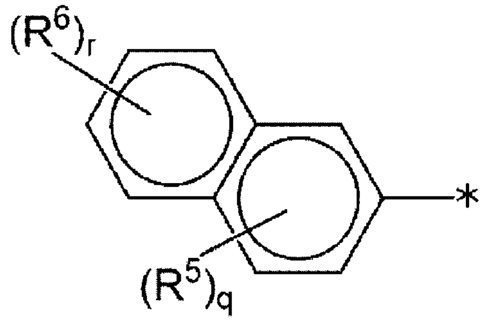

(1-c)

In Formula (1-c), $R^5$ and $R^6$ each independently represent a monovalent aliphatic hydrocarbon group. In addition, q represents an integer of from 0 to 3, and r represents an integer of from 0 to 4. * represents a binding site with terminal O (oxygen atom) in "$(OA^2)_n$" in Formula (1).

Examples of the monovalent aliphatic hydrocarbon group represented by $R^5$ and $R^6$ include the monovalent aliphatic hydrocarbon groups described above (e.g., an alkyl group, an alkenyl group, and an alkynyl group). Among them, an alkyl group is preferred, an alkyl group having from 1 to 18 carbons is more preferred, an alkyl group having from 1 to 12 carbons is still more preferred, an alkyl group having from 1 to 6 carbons is further still more preferred, and an alkyl group having from 1 to 3 carbons is particularly preferred. In addition, q is preferably from 0 to 1. r is preferably from 0 to 1. The alkyl group is preferably an alkyl group having a chain structure, and the preferred range of the number of carbons in the alkyl group having a chain structure is the same as the preferred range of the number of carbons in the aforementioned alkyl group.

In Formula (1-c),

preferably, $R^5$ and $R^6$ are each independently an alkyl group, q is an integer of from 0 to 3, and r is an integer of from 0 to 4,
more preferably, $R^5$ and $R^6$ are each independently a $C_{1-12}$ alkyl group, q is 0 or 1, and r is 0 or 1.

[Chem. 11]

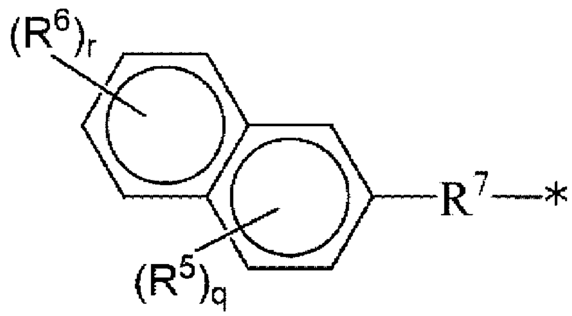

(1-d)

In Formula (1-d), $R^5$, $R^6$, q, r, and * are the same as $R^5$, $R^6$, q, r, and * in Formula (1-c), respectively, including preferred embodiments. $R^7$ represents a divalent aliphatic hydrocarbon group.

Examples of the divalent aliphatic hydrocarbon group represented by $R^7$ include the divalent aliphatic hydrocarbon groups described above (e.g., an alkylene group, a divalent saturated alicyclic hydrocarbon group, and the like). Among them, an alkylene group is preferred, an alkylene group having from 1 to 18 carbons is more preferred, an alkylene group having from 1 to 12 carbons is still more preferred, an alkylene group having from 1 to 6 carbons is further still more preferred, and an alkylene group having from 1 to 3 carbons is particularly preferred.

In Formula (1-d),

preferably, $R^5$ and $R^6$ are each independently an alkyl group, $R^7$ is an alkylene group, q is an integer of 0 to 3, and r is an integer of from 0 to 4,
more preferably, $R^5$ and $R^6$ are each independently a $C_{1-12}$ alkyl group, $R^7$ is a $C_{1-12}$ alkylene group, q is 0 or 1, and r is 0 or 1.

[Chem. 12]

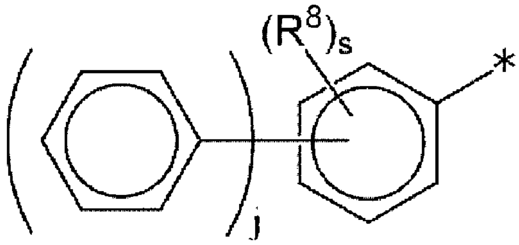

(1-e)

In Formula (1-e), $R^8$ each independently represents a monovalent aliphatic hydrocarbon group. In addition, s represents an integer of from 0 to 4, and j represents an integer of from 1 to 5. s + j is an integer of from 1 to 5. * represents a binding site with terminal O (oxygen atom) in "$(OA^2)_n$" in Formula (1).

Examples of the monovalent aliphatic hydrocarbon group represented by $R^8$ include the monovalent aliphatic hydrocarbon groups described above (e.g., an alkyl group, an alkenyl group, and an alkynyl group). Among them, an alkyl group is preferred, an alkyl group having from 1 to 18 carbons is more preferred, an alkyl group having from 1 to 12 carbons is still more preferred, an alkyl group having from 1 to 6 carbons is further still more preferred, and an alkyl group having from 1 to 3 carbons is particularly preferred. In addition, s is preferably from 0 to 1. j is preferably from 1 to 3. The alkyl group is preferably an alkyl group having a chain structure, and the preferred range of the number of carbons in the alkyl group having a chain structure is the same as the preferred range of the number of carbons in the aforementioned alkyl group.

In Formula (1-e),

preferably, $R^8$ is an alkyl group, s is an integer of from 0 to 4, and j is an integer of from 1 to 5 (where s + j is an integer of from 1 to 5),
more preferably, $R^8$ is an alkyl group, s is 0 or 1, and j is an integer of from 1 to 3,
still more preferably, $R^8$ is a $C_{1-12}$ alkyl group, s is 0 or 1, and j is an integer of from 1 to 3.

[Chem. 13]

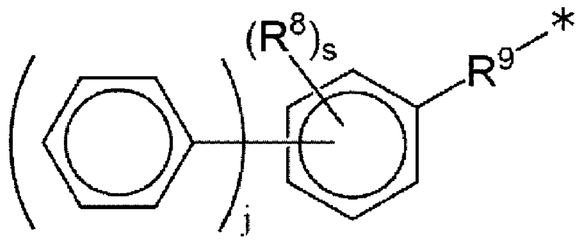

(1-f)

In Formula (1-f), $R^8$, s, j, and * are the same as $R^8$, s, j, and * in Formula (1-e), respectively, including preferred embodiments. $R^9$ represents a divalent aliphatic hydrocarbon group.

Examples of the divalent aliphatic hydrocarbon group represented by $R^9$ include the divalent aliphatic hydrocarbon groups described above (e.g., an alkylene group, a divalent saturated alicyclic hydrocarbon group, and the like). Among them, an alkylene group is preferred, an alkylene group having from 1 to 18 carbons is more preferred, an alkylene group having from 1 to 12 carbons is still more preferred, an alkylene group having from 1 to 6 carbons is further still more preferred, and an alkylene group having from 1 to 3 carbons is particularly preferred.

In Formula (1-f),

preferably, $R^8$ is an alkyl group, $R^9$ is an alkylene group, s is an integer of from 0 to 4, and j is an integer of from 1 to 5 (where s + j is an integer of from 1 to 5),
more preferably, $R^8$ is an alkyl group, $R^9$ is an alkylene group, s is 0 or 1, and j is an integer of from 1 to 3,
still more preferably, $R^8$ is a $C_{1-12}$ alkyl group, $R^9$ is a $C_{1-12}$ alkylene group, s is 0 or 1, and j is an integer of from 1 to 3.

The polycyclic phenyl group represented by $A^1$ is preferably at least one selected from the group consisting of structures represented by Formulae (1-a) to (1-f). Among them, a structure represented by Formula (1-a) is more preferred.

The polymer of the present disclosure has, in its side chain, as a structure derived from the polymerizable monomer (M), a structure other than $X^1$ in Formula (1), i.e., a structure of $A^1$-$(OA^2)_n$-O-. Thus, the polymer of the present disclosure has excellent adhesion to a polyolefin base material. In particular, it is considered that the structure of the terminal portion in the side chain of the polymer, in particular, the structure represented by $A^1$-$(OA^2)_2$- (hereinafter, also referred to as terminal structure) greatly contributes to the adhesion to the base material.

As a method for estimating adhesion of a polymer to a base material, the present inventors have focused on a calculation method of applying B3LYP as a functional of a density functional method, applying 6-31G(d, p) as a basis function, and applying dispersion force correction (GD3BJ keyword) using a Gaussian 16 program available from Gaussian Inc. In the calculation method, the zero-point energy of the terminal structure of the side chain of the polymer of the present disclosure is substituted by the zero-point energy of a molecule having the same structure as the terminal structure, specifically, a molecule represented by Formula (1-1) described below (hereinafter, also referred to as structure molecule (Ip)), and it has been found that there is a correlation between the magnitude of the difference between the sum of the absolute value of the zero-point energy of the structure molecule (Ip) and the absolute value of the zero-point energy of the base material molecule and the absolute value of the zero-point energy of the association of the structure molecule (Ip) and the base material molecule, which are obtained by the calculation method, and the adhesion of the polymer of the present disclosure to the base material.

[Chem. 14]

$A^1$-$(OA^2)_2$-$OCH_3$ (1-1)

In the above formula, $A^1$ and $A^2$ are the same as $A^1$ and $A^2$ in Formula (1), respectively.

Specifically, the structure derived from the polymerizable monomer (M) included in the polymer of the present disclosure preferably satisfies Formula (f1-1) described below.

$$(E_M + E_{P8}) - (E_{MP}) < -80 \text{ kJ/mol} \quad (f1\text{-}1)$$

In Formula (f1-1), $E_M$ is the absolute value of the zero-point energy of the structure molecule (Ip), $E_{P8}$ is the absolute value of the zero-point energy of the propylene octamer, and $E_{MP}$ is the absolute value of the zero-point energy of an association of the structure molecule (Ip) and the propylene octamer.

Here, the structure molecule (Ip) has a structure represented by Formula (1-1). $A^1$ in Formula (1-1) is preferably the same as $A^1$ in Formula (1), and $(OA^2)_2$ in Formula (1-1) is preferably the same as continuous $(OA^2)^2$ directly bound to $A^1$ in Formula (1). That is, $(OA^2)_2$ in Formula (1-1) is preferably the same as $(OA^2)_2$ when Formula (1) is rewritten as $A_1$ -

$(OA^2)_2$ - $(OA^2)_{n-2}$ - $OX_1$.

The zero-point energy of the association means zero-point energy when the structure molecule (Ip) (structure molecule represented by Formula (1-1)) and the propylene octamer are in the same space.

Each zero-point energy in Formula (f1-1) is a zero-point energy obtained by a calculation method applying B3LYP as a functional of a density functional method, 6-31G(d, p) as a basis function, and dispersion force correction (GD3BJ keyword) using a Gaussian 16 program available from Gaussian Inc. Since each zero-point energy obtained by the calculation method is a negative value, the absolute value of each zero-point energy is used in Formula (f1-1). The same applies to each zero-point energy in Formulae (f1-2), (f2-1), and (f2-2) described below.

Formula (f1-1) means that the difference d1 between the sum of the absolute value ($E_M$) of the zero-point energy of the structure molecule (Ip) and the absolute value ($E_{P8}$) of the zero-point energy of the propylene octamer and the absolute value ($E_{MP}$) of the zero-point energy of the association of the structure molecule (Ip) and the propylene octamer is less than -80 kJ/mol.

When the absolute value ($E_M$) of the zero-point energy of the structure molecule (Ip) satisfies Formula (f1-1), the polymer (Pm) having a structure derived from the polymerizable monomer (M) having a corresponding terminal structure as a constituent unit tends to have more excellent adhesion to a polyolefin base material, particularly to a polypropylene base material. The difference d1 is preferably -85 kJ/mol or less, and more preferably -90 kJ/mol or less.

It is also preferred that the structure derived from the polymerizable monomer (M) of the polymer of the present disclosure satisfies Formula (f1-2) described below.

$$(E_M + E_{P8}) - (E_{MP}) < (E_{P6} + E_{P8}) - (E_{PP}) \quad (f1\text{-}2)$$

In Formula (f1-2), $E_M$, $E_{P8}$, and $E_{MP}$ have the same meanings as $E_M$, $E_{P8}$, and $E_{MP}$ in Formula (f1-1), respectively, and are values calculated in the same manner.

In Formula (f1-2), $E_{P6}$ is the absolute value of the zero-point energy of the propylene hexamer, and $E_{PP}$ is the absolute value of the zero-point energy of the association of the propylene octamer and the propylene hexamer. The zero-point energy of the association of the propylene octamer and the propylene hexamer means the zero-point energy when the propylene octamer and the propylene hexamer are in the same space.

Formula (f1-2) means that the difference d1 between the sum of the absolute value ($E_M$) of the zero-point energy of the structure molecule (Ip) and the absolute value ($E_{P8}$) of the zero-point energy of the propylene octamer and the absolute value ($E_{MP}$) of the zero-point energy of the association of the structure molecule (Ip) and the propylene octamer is smaller (larger by a negative value) than the difference d2 between the sum of the absolute value ($E_{P6}$) of the zero-point energy of the propylene hexamer and the absolute value ($E_{P8}$) of the zero-point energy of the propylene octamer and the absolute value ($E_{PP}$) of the zero-point energy of the association of the propylene hexamer and the propylene octamer.

In the polymer of the present disclosure, when the absolute value ($E_M$) of the zero-point energy of the structure molecule (Ip) satisfies Formula (f1-2), the polymer having a structure derived from the polymerizable monomer (M) having a corresponding terminal structure as a constituent unit tends to have more excellent adhesion to a polyolefin base material, particularly to a polypropylene base material.

In Formula (f1-2), the difference (d1 - d2) between the difference d1 and the difference d2 is preferably -15 kJ/mol or less, and more preferably -20 kJ/mol or less.

The group having an ethylenically unsaturated double bond represented by $X^1$ is not particularly limited, but is preferably a radical polymerizable group, and examples thereof include a (meth)acryloyl group; a vinyl group; a styryl group; and an allyl group. Among them, a (meth)acryloyl group is preferred from the viewpoint of increasing the polymerization rate.

$A^2$ in Formula (1) represents an alkylene chain having from 1 to 10 carbons, and the alkylene chain may have a substituent. A plurality of $A^2$ included in Formula (1) may be the same or different, but are preferably the same.

Examples of the alkylene chain represented by $A^2$ include the groups described above as the alkylene group. The number of carbons in the alkylene chain is preferably from 1 to 3, and more preferably 2. In particular, the alkylene chain is preferably an ethylene-1,1-diyl group.

The substituent that can be possessed by the alkylene chain is not particularly limited, and examples thereof include a halogen atom; a polar functional group; an alkoxy group; and a thioalkoxy group.

Examples of the halogen atom include a fluorine atom, a chlorine atom, a bromine atom, and an iodine atom. Among them, a chlorine atom, a bromine atom, and a fluorine atom are preferred, and a fluorine atom is more preferred.

Preferred examples of the polar functional group include a hydroxyl group, a carboxy group, an amino group, and a mercapto group.

As the alkoxy group, for example, an alkoxy group having from 1 to 10 carbons is preferred, an alkoxy group having from 1 to 4 carbons is more preferred, and an alkoxy group having 1 carbon, i.e., a methoxy group is still more preferred.

As the thioalkoxy group, for example, a thioalkoxy group having from 1 to 10 carbons is preferred, a thioalkoxy group having from 1 to 4 carbons is more preferred, and a thioalkoxy group having 1 carbon, i.e., a thiomethoxy group is still more preferred.
n in Formula (1) is not particularly limited as long as it is an integer of from 3 to 100, but is preferably from 4 to 30.
The polymerizable monomer (M) is preferably one in which the polycyclic phenyl group represented by $A^1$ is any of the structures represented by Formulae (1-a) to (1-f), more preferably one in which the alkylene chain represented by $A^2$ is an alkylene chain having from 1 to 3 carbons, and particularly preferably one in which the group having an ethylenically unsaturated double bond represented by $X^1$ is a (meth)acryloyl group.
The polymerizable monomer (M) is also preferably one in which the terminal structure containing a polycyclic phenyl group represented by $A^1$ satisfies the relationship represented by Formula (f1-1) and/or Formula (f1-2), and in addition, it is more preferred that the alkylene chain represented by $A^2$ is an alkylene chain having from 1 to 3 carbons, and in addition, it is particularly preferred that the group having an ethylenically unsaturated double bond represented by $X^1$ is a (meth)acryloyl group.
As a method for producing the polymerizable monomer (M), the same production method as the production method described in "Method for Producing Compound" in "7. Compound" described below can be used. Thus, as the description of the method for producing the polymerizable monomer (M), the description regarding the production method described in "Method for Producing Compound" can be applied as it is, and is omitted here.

Composition, physical properties, and the like of polymer (Pm)

The polymer (Pm) of the present disclosure may be a polymer containing only the structure (M) as a constituent unit, or may be a polymer containing a structure other than the structure (M) as a constituent unit. From the viewpoint of adjusting the hardness of the polymer (Pm) and the like, the polymer (Pm) is preferably a polymer containing, as a constituent unit, a structure other than the structure (M) together with the structure (M).
The structure other than the structure (M) is not particularly limited, but a structure derived from at least one monomer selected from the group consisting of a (meth)acrylic-based monomer and a styrenic-based monomer is preferred. The polymer (Pm) of the present disclosure may contain a structure derived from a (meth)acrylic-based monomer and a structure derived from a styrenic-based monomer as constituent units.
That is, the polymer (Pm) of the present disclosure is preferably a (meth)acrylic-based polymer containing the structure (M) and a structure derived from a (meth)acrylic-based monomer as constituent units (but not including a structure derived from a styrenic-based monomer); a styrenic-based polymer containing the structure (M) and a structure derived from a styrenic-based monomer as constituent units (but not including a structure derived from a (meth)acrylic-based monomer); or a (meth)acryl-styrenic-based polymer containing the structure (M), a structure derived from a (meth) acrylic-based monomer, and a structure derived from a styrenic-based monomer as constituent units, and is more preferably a (meth)acrylic-based polymer.
The polymer (Pm) of the present disclosure contains the structure (M) as a constituent unit, but preferably contains a plurality of the structures (M) as constituent units, and more preferably contains a plurality of the structures (M) as repeating constituent units. When the polymer (Pm) includes a plurality of structures (M) as constituent units, the plurality of structures (M) may be the same or different.
The content of the structure (M) in the polymer (Pm) of the present disclosure is not particularly limited, but the content of the structure (M) is preferably from 1 to 100 mass%, more preferably from 2 to 80 mass%, still more preferably from 4 to 50 mass%, and further still more preferably from 5 to 50 mass%, per 100 mass% of the polymer (Pm).
The (meth)acrylic-based monomer is not particularly limited, and one, or two or more types can be selected and used from known (meth)acrylic acid esters and (meth)acrylic acids.
The total content of the structure (M) and the structure derived from the (meth)acrylic-based monomer in the polymer (Pm) of the present disclosure is not particularly limited, but is, for example, from 30 to 100 mass%, and is preferably 50 mass% or more, more preferably 70 mass% or more, still more preferably 80 mass% or more, further still more preferably 90 mass% or more, and particularly preferably 95 mass% or more, per 100 mass% of the polymer (Pm). In particular, the total content of the structure (M), the structure derived from a (meth)acrylic acid linear alkyl ester described below, the structure derived from a (meth)acrylic acid branched alkyl ester described below, the structure derived from a (meth)acrylic acid ester having a cyclic aliphatic hydrocarbon group described below, and the structure derived from an acid group-containing monomer described below is more preferably adjusted to the above range, and the total content of the structure (M), the structure derived from a low-Tg (meth)acrylic acid alkyl ester described below, the structure derived from a (meth)acrylic acid ester having a cyclic aliphatic hydrocarbon group described below, and the structure derived from an acid group-containing monomer described below is still more preferably adjusted to the above range.
Examples of the (meth)acrylic acid ester include (meth)acrylic acid esters having a linear alkyl group, (meth) acrylic acid esters having a cyclic aliphatic hydrocarbon group, (meth)acrylic acid esters having a branched alkyl group, and (meth)acrylic acid esters having an aromatic hydrocarbon group. (Meth)acrylic acid esters having a linear alkyl group,

(meth)acrylic acid esters having a cyclic aliphatic hydrocarbon group, and (meth)acrylic acid esters having a branched alkyl group are preferred. The (meth)acrylic acid ester may be a monofunctional (meth)acrylic acid ester or a polyfunctional (meth)acrylic acid ester, but is preferably a monofunctional (meth)acrylic acid ester.

Examples of the (meth)acrylic acid ester having a linear alkyl group include:

linear (meth)acrylic acid alkyl esters such as methyl (meth)acrylate, ethyl (meth)acrylate, n-propyl (meth)acrylate, n-butyl (meth)acrylate, n-pentyl (meth)acrylate, n-hexyl (meth)acrylate, n-octyl (meth)acrylate, n-nonyl (meth)acrylate, n-decyl (meth)acrylate, lauryl (meth)acrylate, n-tridecyl (meth)acrylate, cetyl (meth)acrylate, stearyl (meth)acrylate, and behenyl (meth)acrylate;
(meth)acrylic acid esters having a linear alkyl ether group such as methoxyethyl (meth)acrylate, ethyl carbitol (meth) acrylate, and ethoxypolyethylene glycol (meth)acrylate;
amino group-containing (meth)acrylic acid linear alkyl esters such as aminoethyl (meth)acrylate; and
halogen atom-containing (meth)acrylic acid linear alkyl esters such as chloroethyl (meth)acrylate, trifluoroethyl (meth)acrylate, and heptadecafluorooctylethyl (meth)acrylate.

From the viewpoint of adhesion and scratch resistance, the (meth)acrylic acid ester having a linear alkyl group is preferably a linear alkyl (meth)acrylate ester, more preferably methyl (meth)acrylate, ethyl (meth)acrylate, n-propyl (meth) acrylate, n-butyl (meth)acrylate, n-pentyl (meth)acrylate, n-hexyl (meth)acrylate, n-octyl (meth)acrylate, n-nonyl (meth) acrylate, n-decyl (meth)acrylate, lauryl (meth)acrylate, n-tridecyl (meth)acrylate, cetyl (meth)acrylate, stearyl (meth) acrylate, or behenyl (meth)acrylate, still more preferably methyl (meth)acrylate, ethyl (meth)acrylate, n-butyl (meth) acrylate, n-octyl (meth)acrylate, lauryl (meth)acrylate, stearyl (meth)acrylate, or behenyl (meth)acrylate.

Examples of the (meth)acrylic acid ester having a cyclic aliphatic hydrocarbon group include:

cycloalkyl (meth)acrylates such as cyclopentyl (meth)acrylate, cyclohexyl (meth)acrylate, and t-butylcyclohexyl (meth)acrylate; and
esters of (meth)acrylic acid and polycyclic alcohol, such as isobornyl (meth)acrylate, dicyclopentanyl (meth)acrylate, and dicyclopentenyl (meth)acrylate.

Among them, cycloalkyl (meth)acrylate and isobornyl (meth)acrylate are preferred, cyclopentyl (meth)acrylate, cyclohexyl (meth)acrylate, and isobornyl (meth)acrylate are more preferred, cyclohexyl (meth)acrylate and isobornyl (meth)acrylate are still more preferred, and cyclohexyl methacrylate and isobornyl acrylate are further still more preferred.

Examples of the (meth)acrylic acid ester having a branched alkyl group include:

(meth)acrylic acid branched alkyl esters such as isopropyl (meth)acrylate, isobutyl (meth)acrylate, s-butyl (meth) acrylate, t-butyl (meth)acrylate, neopentyl (meth)acrylate, 2-octyl (meth)acrylate, 2-ethylhexyl (meth)acrylate, isodecyl (meth)acrylate, and isostearyl (meth)acrylate;
alkoxy group-containing (meth)acrylic acid branched alkyl esters such as 3-methoxybutyl (meth)acrylate and methoxytripropylene glycol (meth)acrylate; and
halogen atom-containing (meth)acrylic acid branched alkyl esters such as hexafluoroisopropyl (meth)acrylate.

Among them, a (meth)acrylic acid branched alkyl ester is preferred. From the viewpoint of adhesion and scratch resistance, isobutyl (meth)acrylate, s-butyl (meth)acrylate, t-butyl (meth)acrylate, neopentyl (meth)acrylate, 2-ethylhexyl (meth)acrylate, 2-octyl (meth)acrylate, isodecyl (meth)acrylate, and isostearyl (meth)acrylate are preferred, and isobutyl (meth)acrylate, t-butyl (meth)acrylate, 2-ethylhexyl (meth)acrylate, 2-octyl (meth)acrylate, and isostearyl (meth)acrylate are more preferred.

Examples of the (meth)acrylic acid ester having an aromatic hydrocarbon group include:

aryl (meth)acrylates such as phenyl (meth)acrylate and naphthyl (meth)acrylate; and
aralkyl (meth)acrylates such as benzyl (meth)acrylate and phenethyl (meth)acrylate.

These (meth)acrylic acid esters may be used singly or in combination of two or more types thereof.

In particular, from the viewpoint of further enhancing the adhesion to a polyolefin base material, the (meth)acrylic acid ester preferably contains a (meth)acrylic acid alkyl ester having a glass transition temperature (Tg) of a homopolymer of -20°C or lower (hereinafter, it may be referred to as low-Tg (meth)acrylic acid alkyl ester) and/or a (meth)acrylic acid ester having a cyclic aliphatic hydrocarbon group, and more preferably contains a low-Tg (meth)acrylic acid alkyl ester and a (meth)acrylic acid ester having a cyclic aliphatic hydrocarbon group.

As the "glass transition temperature of a homopolymer" in the present specification, for example, a value (when a plurality of Tg are described, the lowest value) described in "POLYMER HANDBOOK THIRD EDITION" (J. BRANDRUP,

E. H. IMMERGUT, 1989, published by John Wiley & Sons, Inc., pages: VI/209 to VI/277) may be adopted. For the compounds not described in "POLYMER HANDBOOK, THIRD EDITION", a value (calculated value) determined with a computer using commercially available software for calculating the glass transition temperature (e.g., "MATERIALS STUDIO" available from Accelrys Software Inc., version: 4.0.0.0, module: Synthia, condition: calculated with a polymerization average molecular weight of 100000) may be used.

The Tg of the low-Tg alkyl (meth)acrylate ester is -20°C or lower, preferably from -100 to -20°C, and more preferably from -80 to -30°C. Examples of the low-Tg (meth)acrylic acid alkyl ester include ethyl acrylate, n-propyl acrylate, n-butyl acrylate, isobutyl acrylate, n-pentyl acrylate, n-hexyl acrylate, n-octyl acrylate, 2-octyl acrylate, 2-ethylhexyl acrylate, n-nonyl acrylate, and isononyl acrylate, and among them, n-butyl acrylate, 2-octyl acrylate, and 2-ethylhexyl acrylate are preferred.

The content of the structure derived from the low-Tg (meth)acrylic acid alkyl ester in the polymer (Pm) of the present disclosure is preferably adjusted such that the Tg of the polymer (Pm) falls within the range described below. For example, the content of the structure derived from the low-Tg (meth)acrylic acid alkyl ester in the polymer (Pm) is preferably from 2 to 80 mass%, more preferably from 10 to 50 mass%, and still more preferably from 15 to 30 mass%, per 100 mass% of the polymer (Pm).

The content of the structure derived from the (meth)acrylic acid ester having a cyclic aliphatic hydrocarbon group in the polymer (Pm) of the present disclosure is preferably from 5 to 90 mass%, more preferably from 15 to 85 mass%, still more preferably from 30 to 80 mass%, and particularly preferably from 50 to 80 mass%, per 100 mass% of the polymer (Pm). In particular, the total content of the structure derived from cycloalkyl (meth)acrylate and the structure derived from isobornyl (meth)acrylate is preferably adjusted to the above range.

As the (meth)acrylic-based monomer, (meth)acrylic acid can be preferably used as an acid group-containing monomer, but acid group-containing monomers other than (meth)acrylic acid can also be preferably used. That is, the polymer (Pm) may further contain a structure derived from an acid group-containing monomer as a constituent unit. When the polymer (Pm) contains a structure derived from an acid group-containing monomer as a constituent unit, the dispersion stability of the resin particles containing the polymer (Pm) in the aqueous dispersion can be improved.

Examples of the acid group-containing monomer include carboxyl group-containing aliphatic monomers such as: unsaturated monocarboxylic acids such as (meth)acrylic acid and crotonic acid; unsaturated dicarboxylic acids such as maleic acid, fumaric acid, itaconic acid, and citraconic acid; anhydrides of unsaturated dicarboxylic acids such as maleic anhydride; and monoesters of unsaturated dicarboxylic acids such as maleic acid monomethyl ester, maleic acid monobutyl ester, itaconic acid monomethyl ester, and itaconic acid monobutyl ester, and carboxyl group-containing aromatic monomers such as vinylbenzoic acids, but the present invention is not limited to these examples.

Each of these acid group-containing monomers may be used singly, or two or more thereof may be used in combination.

Among these acid group-containing monomers, unsaturated monocarboxylic acids and unsaturated dicarboxylic acids are preferred, acrylic acid, methacrylic acid, and itaconic acid are more preferred, and acrylic acid and methacrylic acid are still more preferred, from the viewpoint of improving the dispersion stability in the aqueous dispersion, adhesion, and scratch resistance when the polymer (Pm) is used in the form of emulsion particles.

The content of the structure derived from the acid group-containing monomer (particularly from (meth)acrylic acid) in the polymer (Pm) of the present disclosure is preferably from 0.5 to 10 mass%, more preferably from 1 to 8 mass%, and still more preferably from 3 to 5 mass%, per 100 mass% of the polymer (Pm).

The styrenic-based monomer is not particularly limited, and examples thereof include styrene that may have a functional group such as an alkyl group (e.g., a $C_{1-4}$ alkyl group such as a methyl group or a tert-butyl group), a nitro group, a nitrile group, an alkoxyl group (e.g., a $C_{1-4}$ alkoxyl group such as a methoxy group or an ethoxy group), an acyl group (e.g., an alkylcarbonyl group in which the number of carbons of an alkyl group is from 1 to 4, such as an acetyl group), a sulfone group, a hydroxyl group, a halogen atom (e.g., a fluorine atom, a chlorine atom, or a bromine atom), a vinyl group, or an alkoxysilyl group (e.g., a tri-$C_{1-4}$ alkoxysilyl group such as a trimethoxysilyl group or a triethoxysilyl group). The position of the functional group is not particularly limited, but the functional group is preferably directly bound to a benzene ring.

Specific examples of the styrenic-based monomer include monofunctional styrenic-based monomers such as styrene, $\alpha$-methylstyrene, vinyltoluene (e.g., p-methylstyrene), tert-methylstyrene, chlorostyrene, and 2-styrylethyltrimethoxysilane. As the styrenic-based monomer, a polyfunctional styrenic-based monomer can also be used. Preferred examples of the polyfunctional styrenic-based monomer include divinylbenzene.

Each of these styrenic-based monomers may be used singly, or two or more thereof may be used in combination.

As the styrenic-based monomer, styrene is preferred from the viewpoint of enhancing water resistance.

When the polymer (Pm) of the present disclosure contains a structure derived from a styrenic-based monomer (preferably a (meth)acryl-styrenic-based polymer), the content of the structure derived from a styrenic-based monomer is not particularly limited, but is preferably from 1 to 70 mass%, more preferably from 5 to 50 mass%, and still more preferably from 10 to 30 mass%, per 100 mass% of the polymer (Pm).

The polymer (Pm) of the present disclosure may contain a structural unit derived from a monomer (hereinafter

may be referred to as "monomer Q)") other than the polymerizable monomer (M), the (meth)acrylic acid ester, the acid group-containing monomer, and the styrenic-based monomer. Examples of the monomer (Q) include:

vinyl group-containing silane coupling agents such as vinyltrimethoxysilane and vinyltriethoxysilane;
epoxy group-containing silane coupling agents such as 3-glycidoxypropyltrimethoxysilane, 3-glycidoxypropyltriethoxysilane, and 2-(3,4-epoxycyclohexyl)ethyltrimethoxysilane;
epoxy group-containing vinyl monomers such as allyl glycidyl ether;
vinyl lactam-based monomers such as N-methylvinylpyrrolidone, N-vinylpiperidone, N-vinylcaprolactam, N-vinylpyrrolidone, N-vinyl-2-pyrrolidone, and N-(meth)acryloylpyrrolidone;
maleimide-based monomers such as maleimide, N-phenylmaleimide, and N-cyclohexylmaleimide;
addition polymerizable oxazolines such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline;
(meth)acrylonitrile;
(meth)acrylamide monomers such as (meth)acrylamide, N-monomethyl (meth)acrylamide, N-monoethyl (meth) acrylamide, N,N-dimethyl (meth)acrylamide, and N-n-propyl (meth)acrylamide;
vinyl-based monomers such as vinyl acetate, vinyl chloride, and vinyl benzoate; and
olefinic-based monomers such as ethylene and propylene.

The content of the structure derived from the monomer (Q) is preferably 30 mass% or less, more preferably 10 mass% or less, still more preferably 5 mass% or less, particularly preferably 0 mass%, per 100 mass% of the polymer (Pm).

As the polymer (Pm) of the present disclosure, the polymerizable monomer (M) constituting the polymer (Pm) is preferably a (meth)acrylic-based monomer (M1) in which $X^1$ is a (meth)acryloyl group, the polymer (Pm) is more preferably a copolymer of the monomer (M1) and a (meth)acrylic-based monomer and/or a styrenic-based monomer, and still more preferably a copolymer of the monomer (M1), a (meth)acrylic-based monomer, and a styrenic-based monomer.

The weight average molecular weight of the polymer (Pm) of the present disclosure is not particularly limited, but is preferably 50000 or more, more preferably 100000 or more, still more preferably 200000 or more, and particularly preferably 600000 or more from the viewpoint of adhesion. The upper limit value of the weight average molecular weight is preferably 5000000 or less from the viewpoint of viscosity and film formability. The weight average molecular weight means a weight average molecular weight (in terms of polystyrene) measured using gel permeation chromatography [available from Tosoh Corporation, product number: HLC-8120GPC, column: TSKgel G-5000HXL and TSKgel GMHXL-L used in series].

The glass transition temperature (Tg) of the polymer (Pm) of the present disclosure is not particularly limited, but, for example, is preferably in a range of from -70 to 100°C from the viewpoint of followability to the base material. The lower limit of the Tg is more preferably -65°C or higher, and still more preferably -60°C or higher. Meanwhile, the upper limit of the Tg is more preferably 80°C or lower, still more preferably 60°C or lower.

The glass transition temperature (Tg) of the polymer (Pm) of the present disclosure is also preferably in a range of from -40 to 50°C. In a case where the polymer (Pm) is used as a binder of the ink of the present disclosure described below, when the glass transition temperature is -40°C or higher, the thermal stability of the obtained image tends to be excellent, whereas when the glass transition temperature is 50°C or lower, the ink tends to be excellent in film formability at low temperature. The upper limit of the Tg is more preferably 45°C or lower, and still more preferably 40°C or lower. Meanwhile, the lower limit of the Tg is more preferably -35°C or higher, still more preferably -30°C or higher.

As the glass transition temperature, a value obtained through any of differential scanning calorimetry (DSC), differential thermal analysis (DTA), and thermomechanical analysis (TMA) can be adopted, but a value obtained through differential scanning calorimetry (DSC) is preferably adopted. Unless otherwise specified, the glass transition temperature in the present specification means a value obtained through differential scanning calorimetry (DSC). Examples of the differential scanning calorimeter include a product number: DSC220C available from Seiko Instruments Inc. When the differential scanning calorimetry is performed, a method of drawing a differential scanning calorimetry (DSC) curve, a method of obtaining a first differential curve from a differential scanning calorimetry (DSC) curve, a method of performing smoothing treatment, a method of obtaining a target peak temperature, and the like are not particularly limited. For example, when the aforementioned measurement device is used, the drawing may be performed from data obtained by using the measurement device. In such a case, analysis software capable of performing mathematical processing can be used. Examples of the analysis software include analysis software (available from Seiko Instruments Inc., product number: EXSTAA6000). For the measurement conditions, it is preferred to perform the measurement at a temperature raising rate of 15°C/min and a temperature lowering rate of 15°C/min, and a value obtained under these conditions is adopted. In the above measurement, the start temperature, the intermediate temperature, the bending point temperature, and the end temperature of the glass transition are observed, and the intermediate temperature is defined as the glass

transition temperature (Tg) of the resin emulsion particles.

Method for producing polymer (Pm)

The polymer (Pm) of the present disclosure can be produced by polymerizing a polymerizable monomer composition containing the polymerizable monomer (M) represented by Formula (1).

Examples of the monomer other than the polymerizable monomer (M) include the (meth)acrylic-based monomer, the styrenic-based monomer, the acid group-containing monomer, and the monomer (Q) described above, and the (meth) acrylic-based monomer and/or the styrenic-based monomer is preferred. The content (charging amount) and the blending proportion of each polymerizable monomer in the polymerizable monomer composition may be appropriately selected so as to have the content of the structure derived from each monomer in the target polymer.

The polymerization method is not particularly limited, and any known polymerization method can be used. For example, a solution polymerization method, a suspension polymerization method, an emulsion polymerization method, a UV curing method, or the like can be adopted.

2. Resin Particles

The resin particles of the present disclosure contain the polymer (Pm) of the present disclosure described above. The resin particles of the present disclosure may also be referred to as resin particles (Pp). The resin particles (Pp) may contain only the polymer (Pm) as a resin component, or may contain the polymer (Pm) and a polymer (hereinafter, polymer (Pm2)) different from the polymer (Pm). As a form in which the resin particles (Pp) contain the polymer (Pm) and the polymer (Pm2), Form A in which the resin particles (Pp) are particles having a multilayer structure, any one or more layers are composed of the polymer (Pm), and the remaining layers are composed of the polymer (Pm2); Form B in which the resin particles (Pp) are composed of a polymer alloy of the polymer (Pm) and the polymer (Pm2); or the like can be exemplified, and Form A is preferred.

The polymer (Pm) constituting the resin particles of the present disclosure including its preferred embodiment is the same as the polymer (Pm) described in "1. Polymer", and the description thereof can be applied.

The shape of the resin particles (Pp) of the present disclosure is not particularly limited, and examples thereof include a spherical shape, a plate shape, and a needle shape. The shape is preferably spherical. The shape can be measured using a transmission electron microscope or a scanning electron microscope.

The average particle size of the resin particles (Pp) of the present disclosure is not particularly limited, but is preferably 10 nm or more and 1000 nm or less. When the resin particles (Pp) of the present disclosure are used in a dispersion system (e.g., ink) dispersed in a solvent, the average particle size is more preferably 10 nm or more and 1 μm or less from the viewpoint that the particles are easily dispersed uniformly and a dispersion system having excellent dispersion stability is easily obtained. The average particle size is more preferably 50 nm or more and 500 nm or less, still more preferably 100 nm or more and 400 nm or less, and particularly preferably 150 nm or more and 350 nm or less, from the viewpoint that the resin particles (Pp) are easily blended at a high concentration while the viscosity of the dispersion is maintained in an appropriate range.

In the present specification, the average particle size of the resin particles is an average particle size (hydrodynamic size) obtained by determining an autocorrelation function by a photon correlation method using a particle size distribution measuring instrument (available from OTSUKA ELECTRONICS CO., LTD., product number: nanoSAQLA) by a dynamic light scattering method and performing cumulant analysis.

The structure of the resin particles (Pp) of the present disclosure is not particularly limited, and it may be a form in which the composition of the entire particles is uniform, or may be a core-shell structure including a core portion and a shell portion having different compositions and/or physical properties. The core-shell structure is not limited to a two-layer structure, and the structure may have three or more layers. That is, the resin particles (Pp) may be particles having a single-layer structure in which the entire particles are composed of the polymer (Pm), or may be particles having a multilayer structure composed of the polymer (Pm) and the polymer (Pm2). When the resin particles (Pp) have a single-layer structure, the entire particles are preferably composed of the polymer (Pm), whereas when the resin particles (Pp) have a multilayer structure, the outermost layer (i.e., the shell portion) is preferably composed of the polymer (Pm). With such a configuration, the ink containing the resin particles (Pp) can exhibit more excellent adhesion to a base material made of polyolefin.

Among them, the resin particles (Pp) are preferably in the form of a core-shell structure including two or more layers capable of improving the balance between the elongation and hardness of the coating film. In the core-shell structure, it is preferred from the viewpoint of adhesion that a large amount of the polymer of the polymerizable monomer (M) is present in the shell layer as the outermost layer (specifically, a large amount of the polymer (Pm) is present in the shell layer as the outermost layer).

When the resin particles (Pp) are particles having a core-shell structure, the polymer constituting a layer other

than the outermost layer (e.g., a core portion) may be the polymer (Pm) or the polymer (Pm2), but is preferably the polymer (Pm2). When both the core and the shell are composed of the polymer (Pm), the mass proportion of the structure derived from the polymerizable monomer (M) in the polymer (Pm) in the shell portion is preferably larger than the mass proportion of the structure derived from the polymerizable monomer (M) in the polymer (Pm) in the core portion.

The polymer (Pm2) is not particularly limited, and examples thereof include vinyl-based resins, (meth)acrylic-based resins, olefinic-based resins, urethane-based resins, fluorine-based resins, silicone-based resins, epoxy resins, phenoxy resins, phenol resins, xylene resins, and blocked isocyanates. When the resin particles (Pp) are in the above-described Form A, the polymer (Pm2) is preferably a (meth)acrylic-based resin (hereinafter, (meth)acrylic-based polymer (2)). The polymer (Pm2) is preferably an olefinic-based resin from the viewpoint of adhesion, and in particular, when the resin particles (Pp) are in the above-described Form B, the polymer (Pm2) is preferably an olefinic-based resin.

The (meth)acrylic-based polymer (2) is a polymer containing a structural unit derived from a (meth)acrylic-based monomer. Examples of the (meth)acrylic-based monomer include the compounds exemplified as the (meth)acrylic-based monomer. These (meth)acrylic-based monomers may be used singly or in combination of two or more types thereof.

The content of the structure derived from the (meth)acrylic-based monomer in the (meth)acrylic-based polymer (2) is not particularly limited, but is, for example, from 30 to 100 mass%, and is preferably 50 mass% or more, more preferably 70 mass% or more, still more preferably 80 mass% or more, further still more preferably 90 mass% or more, and particularly preferably 95 mass% or more, per 100 mass% of the (meth)acrylic-based polymer (2). In particular, it is more preferred to adjust the total content of the structure derived from a low-Tg (meth)acrylic acid alkyl ester, the structure derived from a (meth)acrylic acid ester having a cyclic aliphatic hydrocarbon group, and the structure derived from an acid group-containing monomer to the above range.

From the viewpoint of film formability, the (meth)acrylic-based polymer (2) preferably contains at least a low-Tg (meth)acrylic acid alkyl ester. The low-Tg (meth)acrylic acid alkyl ester is the same as the low-Tg (meth)acrylic acid alkyl ester described above, including preferred embodiments thereof.

The content of the structure derived from the low-Tg (meth)acrylic acid alkyl ester in the (meth)acrylic-based polymer (2) is preferably adjusted such that the Tg of the (meth)acrylic-based polymer (2) falls within the range described below. For example, the content of the structure derived from the low-Tg (meth)acrylic acid alkyl ester is preferably from 2 to 80 mass%, more preferably from 10 to 50 mass%, and still more preferably from 15 to 30 mass% per 100 mass% of the (meth)acrylic-based polymer (2).

From the viewpoint of improving adhesion, the (meth)acrylic-based polymer (2) preferably further contains a structural unit derived from a (meth)acrylic acid ester having a cyclic aliphatic hydrocarbon group. The (meth)acrylic acid ester having a cyclic aliphatic hydrocarbon group is the same as the (meth)acrylic acid ester having a cyclic aliphatic hydrocarbon group described above, including preferred embodiments thereof.

The content of the structure derived from the (meth)acrylic acid ester having a cyclic aliphatic hydrocarbon group in the (meth)acrylic-based polymer (2) is preferably from 30 to 90 mass%, more preferably from 50 to 85 mass%, and still more preferably from 65 to 80 mass% per 100 mass% of the (meth)acrylic-based polymer (2). In particular, the total content of the structure derived from cycloalkyl (meth)acrylate and the structure derived from isobornyl (meth)acrylate is preferably adjusted to the above range.

The (meth)acrylic-based polymer (2) preferably further contains a structural unit derived from an acid group-containing monomer from the viewpoint of improving dispersion stability during polymerization. The acid group-containing monomer is the same as the acid group-containing monomer described above, including preferred embodiments thereof.

The content of the structure derived from the acid group-containing monomer (particularly from (meth)acrylic acid) in the (meth)acrylic-based polymer (2) is preferably from 0.5 to 10 mass%, more preferably from 1 to 8 mass%, and still more preferably from 3 to 5 mass% per 100 mass% of the (meth)acrylic-based polymer (2).

The (meth)acrylic-based polymer (2) may further contain a structural unit derived from a styrenic-based monomer. The styrenic-based monomer is the same as the styrenic-based monomer described above, including preferred embodiments thereof.

The content of the structure derived from a styrenic-based monomer (particularly from styrene) in the (meth) acrylic-based polymer (2) is preferably 30 mass% or less, more preferably 10 mass% or less, and still more preferably 5 mass% or less per 100 mass% of the (meth)acrylic-based polymer (2).

The (meth)acrylic-based polymer (2) may further contain the structure (M), but it is preferred that the (meth) acrylic-based polymer (2) does not contain the structure (M). The structure (M) is the same as the structure (M) described above, including preferred embodiments thereof.

The content of the structure (M) in the (meth)acrylic-based polymer (2) is preferably 10 mass% or less, more preferably 5 mass% or less, and still more preferably 1 mass% or less per 100 mass% of the (meth)acrylic-based polymer (2).

The (meth)acrylic-based polymer (2) may further contain a structural unit derived from an additional monomer other than the (meth)acrylic-based monomer, the styrenic-based monomer, the acid group-containing monomer, and the polymerizable monomer (M), but it is preferred that the (meth)acrylic-based polymer (2) does not contain the structural

unit. Examples of the additional monomer include the monomers exemplified as the monomer (Q).

The content of the structure derived from the monomer (Q) in the (meth)acrylic-based polymer (2) is preferably 20 mass% or less, more preferably 10 mass% or less, and still more preferably 5 mass% or less per 100 mass% of the (meth) acrylic-based polymer (2).

The weight average molecular weight of the polymer (Pm2) (preferably, the (meth)acrylic-based polymer (2)) is not particularly limited, but is preferably 50000 or more, more preferably 100000 or more, still more preferably 200000 or more, and particularly preferably 600000 or more from the viewpoint of improving the coating film strength. The upper limit of the weight average molecular weight is preferably 5000000 or less from the viewpoint of suppressing a decrease in film formability. The weight average molecular weight can be determined by the same method as the method of determining the weight average molecular weight of the polymer (Pm).

The glass transition temperature of the polymer (Pm2) (preferably, the (meth)acrylic-based polymer (2)) is not particularly limited, but is preferably from 50 to 120°C, and more preferably from 70 to 110°C. The glass transition temperature can be determined by the same method as the method for determining the weight average molecular weight of the polymer (Pm).

When the resin particles (Pp) contain the polymer (Pm) and the polymer (Pm2), the content ratio of the polymer (Pm) to the polymer (Pm2) (polymer (Pm):polymer (Pm2)) is preferably from 5:95 to 95:5, and more preferably from 30:70 to 70:30 on a mass basis. In particular, the content ratio between the polymer (Pm) and the (meth) acrylic-based polymer (2) (polymer (Pm):(meth)acrylic-based polymer (2)) is preferably adjusted to the above range.

The content of the polymer (Pm) contained in the resin particles (Pp) of the present disclosure is not particularly limited, but is preferably 50 mass% or more, more preferably 80 mass% or more, still more preferably 95 mass% or more, and particularly preferably 100 mass% per 100 mass% of the resin component contained in the resin particles (Pp) of the present disclosure. In particular, when the resin particles (Pp) are particles having a single-layer structure, it is preferred to adjust the content of the polymer (Pm) contained in the resin particles (Pp) to the above range, and when the resin particles (Pp) are particles having a multilayer structure, it is preferred to adjust the content of the polymer (Pm) per 100 mass% of the resin component contained in the outermost layer (i.e., the shell portion) to the above range.

The content of the resin component contained in the resin particles (Pp) of the present disclosure is not particularly limited, but is preferably 80 mass% or more, more preferably 90 mass% or more, still more preferably 95 mass% or more, and particularly preferably 98 mass% or more per 100 mass% of the resin particles (Pp) of the present disclosure.

The resin particles (Pp) of the present disclosure may contain a component other than the resin component. Examples of the component other than the resin component include an emulsifier (surfactant).

The glass transition temperature (Tg) of the resin particles (Pp) of the present disclosure is not particularly limited, but is, for example, preferably in a range of from -70 to 100°C from the viewpoint of film formability and adhesion. The lower limit of the Tg is more preferably -65°C or higher, and still more preferably -60°C or higher. Meanwhile, the upper limit of the Tg is more preferably 80°C or lower, still more preferably 60°C or lower.

The glass transition temperature (Tg) of the resin particles (Pp) of the present disclosure is also preferably in a range of from -40 to 50°C. When the resin particles (Pp) are used as a binder of the ink of the present disclosure described below, the thermal stability of the resulting image is likely to be excellent when the glass transition temperature is -40°C or higher. Meanwhile, the ink is likely to have excellent film formability at a low temperature when the glass transition temperature is 50°C or lower. The upper limit of the Tg is more preferably 45°C or lower, and still more preferably 40°C or lower. Meanwhile, the lower limit of the Tg is more preferably -35°C or higher, still more preferably -30°C or higher.

As the glass transition temperature of the resin particles (Pp) of the present disclosure, a value obtained by the same measurement method as the method for obtaining the glass transition temperature of the polymer (Pm) is adopted.

The method for producing the resin particles (Pp) of the present disclosure is not particularly limited. For example, the resin particles (Pp) can be produced using a polymerizable monomer composition containing the polymerizable monomer (M) represented by Formula (1) as a raw material by a known emulsion polymerization method, suspension polymerization method, or bulk polymerization pulverization method. Among them, the method for producing the resin particles (Pp) of the present disclosure is preferably an emulsion polymerization method or a suspension polymerization method performed in an aqueous medium. Through such a production method, a polymerization liquid containing resin particles dispersed therein is obtained, and the resin particles contained in the polymerization liquid tend to have excellent dispersion stability in the aqueous medium. Resin particles obtained by an emulsion polymerization method performed in an aqueous medium are particularly excellent in dispersion stability. Resin particles obtained by an emulsion polymerization method performed in an aqueous medium are also referred to as aqueous emulsion particles.

In the emulsion polymerization method, the polymerization may be performed in only one stage or in multiple stages. For example, at the first stage, a polymerizable monomer composition containing a monomer constituting the polymer (Pm2) is polymerized in an aqueous medium to synthesize seed particles to become a core (i.e., the polymer (Pm2)), and then a polymerizable monomer composition containing a monomer constituting the polymer (Pm) is polymerized to synthesize a shell (i.e., the polymer (Pm)), whereby resin particles having a core-shell structure can

be produced.

Resin particles having a core-shell structure can also be produced by a method in which particles obtained by a suspension polymerization method, an emulsion polymerization method, or the like are used as seed particles, and emulsion polymerization is performed in the presence of the seed particles (seed emulsion polymerization method).

The content (charging amount) and blending proportion of each polymerizable monomer in the polymerizable monomer composition may be appropriately selected so as to have the content of the structure derived from each polymerizable monomer in the target polymer (Pm) or polymer (Pm2).

As described above, among the resin particles (Pp) of the present disclosure, resin particles obtained by an emulsion polymerization method or a suspension polymerization method performed in an aqueous medium are preferred, and aqueous emulsion particles are more preferred.

The aqueous medium means a solvent containing 50 mass% or more of water. The content of water is preferably 60 mass% or more, more preferably 80 mass% or more, still more preferably 95 mass% or more, and particularly preferably 100 mass% per 100 mass% of the aqueous medium. As the solvent other than water in the aqueous medium, a solvent compatible with water is preferred. Examples of the solvent include alcohols, ethers, ketones, and esters, and specific examples thereof include solvents exemplified as organic solvents contained in the aqueous dispersion described below. Also when the resin particles (Pp) of the present disclosure are aqueous emulsion particles, preferred embodiments in terms of particle shape, average particle size, particle structure, particle composition, glass transition temperature, and the like are the same as the preferred embodiments described for the resin particles (Pp) of the present disclosure.

3. Aqueous Dispersion

The aqueous dispersion of the present disclosure is characterized by containing the resin particles (Pp) of the present disclosure. More specifically, the aqueous dispersion of the present disclosure is formed by dispersing the resin particles (Pp) in an aqueous solvent.

The aqueous solvent means a solvent containing water. The content of water in the aqueous solvent is not particularly limited, but is preferably from 10 to 100 mass%, more preferably 25 mass% or more, still more preferably 50 mass% or more, and particularly preferably 80 mass% or more per 100 mass% of the aqueous solvent. The balance is preferably an organic solvent.

The organic solvent is preferably an organic solvent compatible with water, and examples thereof include monohydric alcohols, polyhydric alcohols, polyhydric alcohol derivatives, ethers, ketones, and esters. Among them, monohydric alcohols, polyhydric alcohols, and polyhydric alcohol derivatives are preferred.

The monohydric alcohol is preferably a monohydric alcohol having from 1 to 3 carbons, such as methanol, ethanol, or 2-propanol.

The polyhydric alcohol is preferably a glycol such as ethylene glycol, diethylene glycol, triethylene glycol, tetraethylene glycol, propylene glycol, dipropylene glycol, tripropylene glycol, 1,3propanediol, or glycerin.

The polyhydric alcohol derivative is more preferably a glycol derivative, and examples of the glycol derivative include monoalkyl ethers of glycols such as ethylene glycol monomethyl ether, diethylene glycol monomethyl ether, diethylene glycol monoethyl ether, diethylene glycol monoisopropyl ether, diethylene glycol monobutyl ether, or diethylene glycol monoisobutyl ether; monocarboxylic acid esters of glycols such as ethylene glycol monoacetate; dialkyl ethers of glycols such as ethylene glycol dimethyl ether; dicarboxylic acid esters of glycols such as ethylene glycol diacetate; and monoalkyl ether monocarboxylic acid esters of glycols such as ethylene glycol monomethyl ether acetate.

As the organic solvent, glycols and monoalkyl ethers of glycols are preferred, mono, di, or tri $C_{2-3}$ alkylene glycols and di $C_{2-3}$ alkylene glycol mono $C_{1-4}$ alkyl ethers are more preferred, and propylene glycol, diethylene glycol, triethylene glycol, diethylene glycol monomethyl ether, diethylene glycol monoethyl ether, diethylene glycol monoisopropyl ether, diethylene glycol monobutyl ether, and diethylene glycol monoisobutyl ether are still more preferred. The organic solvents may be used singly or in combination of two or more types thereof.

The resin particles (Pp) contained in the aqueous dispersion of the present disclosure, including preferred embodiments thereof, are the same as the resin particles (Pp) described in "2. Resin particles", and the description thereof can be applied.

The resin particles (Pp) contained in the aqueous dispersion of the present disclosure are preferably the aqueous emulsion particles. That is, an aqueous dispersion in which aqueous emulsion particles are dispersed and contained in an aqueous solvent is one of preferred embodiments of the aqueous dispersion of the present disclosure. An aqueous dispersion in which aqueous emulsion particles are dispersed and contained in an aqueous solvent is also referred to as aqueous emulsion.

In addition to the resin particles (Pp) and the aqueous solvent, the aqueous dispersion of the present disclosure can contain a dispersant for the purpose of improving the dispersion stability of the resin particles (Pp). Examples of the dispersant include a surfactant and a water-soluble polymer.

The resin particles (Pp) are preferably dispersed and stabilized with a surfactant in the aqueous dispersion, and the aqueous emulsion particles are preferably dispersed and stabilized with a surfactant in the aqueous emulsion. Examples of the surfactant include nonionic surfactants, anionic surfactants, cationic surfactants, and amphoteric surfactants, and known surfactants are exemplified. These surfactants may be contained singly or in combination of two or more types in the aqueous dispersion (preferably the aqueous emulsion). Among the surfactants, nonionic surfactants and/or anionic surfactants are preferred. The surfactant is also preferably a surfactant containing a polymerizable group in its molecule. Examples of the polymerizable group include a group having an ethylenically unsaturated double bond. Among the surfactants, a nonionic surfactant containing a polymerizable group and/or an anionic surfactant containing a polymerizable group are particularly preferred. The surfactant containing a polymerizable group is also referred to as reactive emulsifier. As the surfactant, a polymer emulsifier can also be used.

Examples of the anionic surfactant include alkyl sulfate salts such as ammonium dodecyl sulfate and sodium dodecyl sulfate; alkyl sulfonate salts such as ammonium dodecyl sulfonate, sodium dodecyl sulfonate, and sodium alkyl diphenyl ether disulfonate; alkyl aryl sulfonate salts such as ammonium dodecylbenzene sulfonate, sodium dodecylbenzene sulfonate, and sodium dodecylnaphthalene sulfonate; polyoxyethylene alkyl sulfonate salts; polyoxyethylene alkyl ether sulfate salts; polyoxyethylene alkyl aryl ether sulfate salts; polyoxyethylene polycyclic phenyl ether sulfate salts; dialkyl sulfosuccinate salts; arylsulfonic acid-formalin condensate; fatty acid salts such as ammonium laurate and sodium stearylate; sulfuric acid esters having an allyl group or salts thereof, such as bis(polyoxyethylene polycyclic phenyl ether) methacrylate sulfonate salts, propenyl-alkyl sulfosuccinate ester salts, (meth)acrylic acid polyoxyethylene sulfonate salts, (meth)acrylic acid polyoxyethylene phosphonate salts, and sulfonate salts of allyloxymethylalkyloxypolyoxyethylene; sulfate ester salts of aryloxymethyl alkoxyethyl polyoxyethylene, and ammonium salts of polyoxyalkylene alkenyl ether sulfate.

Examples of the nonionic surfactant include polyoxyethylene alkyl ethers, polyoxyethylene alkylaryl ethers, condensates of polyethylene glycol and polypropylene glycol, sorbitan fatty acid esters, polyoxyethylene sorbitan fatty acid esters, fatty acid monoglycerides, condensation products of ethylene oxide and aliphatic amines, and polyoxyalkylene alkenyl ethers.

Examples of the polymer emulsifier include poly(meth)acrylate salts such as sodium polyacrylate; polyvinyl alcohol; polyvinylpyrrolidone; polyhydroxyalkyl (meth)acrylates such as polyhydroxyethyl acrylate; and copolymers containing one or more monomers constituting these polymers as a copolymerization component.

Examples of the reactive emulsifier include:

anionic surfactants having a polymerizable group, such as propenylalkylsulfosuccinate ester salts, (meth)acrylic acid polyoxyethylene sulfonate salts, (meth)acrylic acid polyoxyethylene phosphonate salts (e.g., trade name: Eleminol RS-30, available from Sanyo Chemical Industries, Ltd.), polyoxyethylene alkyl propenyl phenyl ether sulfonate salts (e.g., trade name: AQUALON HS-10, available from DKS Co., Ltd.), sulfonate salts of allyloxymethylalkyloxy polyoxyethylene (e.g., trade name: AQUALON KH-10, available from DKS Co., Ltd.), polyoxyethylene styrenated ammonium propenyl phenyl ether sulfate (e.g., trade name: AQUALON AR-10, available from DKS Co., Ltd.), sulfonate salts of allyloxymethyl nonylphenoxyethyl hydroxypolyoxyethylene (e.g., trade name: ADEKA REASOAP SE-10, available from ADEKA CORPORATION), allyloxymethyl alkoxyethyl hydroxypolyoxyethylene sulfonate ester salts (e.g., trade name: ADEKA REASOAP SR-10, SR-30, available from ADEKA CORPORATION), and bis(polyoxyethylene polycyclic phenyl ether) methacrylated sulfonate salts (e.g., trade name: Antox MS-60, available from Nippon Nyukazai Co., Ltd.); and

nonionic surfactants having a polymerizable group, such as polyoxyethylene styrenated propenyl phenyl ether (e.g., trade name: AQUALON AN-10, available from DKS Co., Ltd.), allyloxymethyl alkoxyethyl hydroxypolyoxyethylenes (e.g., trade name: ADEKA REASOAP ER-20, available from ADEKA CORPORATION), polyoxyethylene alkyl propenyl phenyl ether (e.g., trade name: AQUALON RN-20, available from DKS Co., Ltd.), and allyloxymethyl nonylphenoxyethyl hydroxypolyoxyethylene (e.g., trade name: ADEKA REASOAP NE-10, available from ADEKA CORPORATION).

The content of the dispersant (preferably a surfactant) is preferably from 0.5 to 10 parts by mass, and more preferably from 1.0 to 5 parts by mass, per 100 parts by mass of the resin particles (Pp).

As described above, the resin particles (Pp) obtained by the emulsion polymerization method performed in an aqueous medium are referred to as aqueous emulsion particles, and the aqueous dispersion in which the aqueous emulsion particles are dispersed and contained in the aqueous solvent is referred to as aqueous emulsion. The polymerization liquid obtained by the emulsion polymerization method performed in an aqueous medium is a preferred embodiment of the aqueous dispersion of the present disclosure, and is also a preferred embodiment of the aqueous emulsion.

The content of the resin particles (Pp) contained in the aqueous dispersion is not particularly limited, but the content of the resin particles (Pp) is preferably from 10 to 70 mass% per 100 mass% of the aqueous dispersion. When the

content is 10 mass% or more, the film formability is excellent, whereas when the content is 70 mass% or less, the viscosity tends to be low, and the workability tends to be excellent. The content is more preferably 20 mass% or more and 65 mass% or less, still more preferably 30 mass% or more and 60 mass% or less.

The dispersion average particle size of the resin particles (Pp) in the aqueous dispersion of the present disclosure is not particularly limited, but is preferably 10 nm or more and 1 μm or less from the viewpoint of excellent dispersion stability. The dispersion average particle size is more preferably 50 nm or more and 500 nm or less, still more preferably 100 nm or more and 400 nm or less, and particularly preferably 150 nm or more and 350 nm or less from the viewpoint that the resin particles are easily blended at a high concentration while the viscosity of the dispersion is maintained in an appropriate range.

The dispersion average particle size of the resin particles (Pp) in the aqueous dispersion of the present disclosure can be measured by a measurement method using a laser diffraction scattering particle size distribution meter or a dynamic light scattering method. In any of the measurement methods, a sample obtained by appropriately diluting the aqueous dispersion with ion-exchanged water may be used. Among them, it is preferred to adopt an average particle size (hydrodynamic size) obtained by determining an autocorrelation function by a photon correlation method using a particle size distribution measuring instrument (available from OTSUKA ELECTRONICS CO., LTD., product number: nano-SAQLA) by a dynamic light scattering method and performing cumulant analysis.

The pH of the aqueous dispersion of the present disclosure is preferably from 5 to 10, more preferably from 6 to 9.5, and still more preferably from 7 to 9.5 from the viewpoint of the stability of the aqueous dispersion.

For adjusting the pH of the aqueous dispersion of the present disclosure to the above-described range, any pH adjuster can be used. Specific examples of such a pH adjuster include alkali metal compounds such as sodium hydroxide and potassium hydroxide; alkaline earth metal compounds such as calcium hydroxide and calcium carbonate; ammonia; and water-soluble organic amines such as dimethylaminoethanol, monomethylamine, dimethylamine, trimethylamine, monoethylamine, diethylamine, triethylamine, monopropylamine, dimethylpropylamine, monoethanolamine, diethanolamine, triethanolamine, ethylenediamine, and diethylenetriamine. These pH adjusters can be used singly or in combination of two or more types thereof.

The method for producing the aqueous dispersion of the present disclosure is not particularly limited. The aqueous dispersion can be produced by mixing the resin particles (Pp) and an aqueous solvent. For example, a method in which resin particle (Pp) powder is mixed in an aqueous solvent and dispersed therein can be adopted. As necessary, the dispersant and the like can be mixed. As described above, the aqueous emulsion obtained through emulsion polymerization of the polymerizable monomer composition containing the polymerizable monomer (M) in an aqueous medium can be used as is as the aqueous dispersion of the present disclosure. The aqueous dispersion of the present disclosure can be obtained by heating the aqueous emulsion obtained through emulsion polymerization of the polymerizable monomer composition containing the polymerizable monomer (M) in an aqueous medium to remove a part of the solvent and adjust the content and the like of the aqueous emulsion particles.

The aqueous dispersion of the present disclosure can also be obtained by adding and mixing water, an organic solvent, or an aqueous solvent to and with an aqueous emulsion obtained through emulsion polymerization of the polymerizable monomer composition containing the polymerizable monomer (M) in an aqueous medium.

## 4. Ink

The ink of the present disclosure is an ink containing a binder and a solvent, characterized in that the binder contains the polymer (Pm) of the present disclosure and/or the resin particles (Pp) of the present disclosure.

Thus, when the ink of the present disclosure is used, a printed matter excellent in adhesion to the base material tends to be easily obtained. In particular, when the base material is made of a polyolefin, it is easy to obtain a printed matter having more excellent adhesion to the base material.

The solvent constituting the ink of the present disclosure is not particularly limited. For example, the solvent may be water, an organic solvent, or a combination thereof. Among them, water or a solvent using water and an organic solvent in combination is preferred, and an aqueous solvent is more preferred. The aqueous solvent has the same meaning as the aqueous solvent described as the aqueous solvent constituting the aqueous dispersion of the present disclosure (means a solvent containing water), and the preferred range of the content of water in the aqueous solvent is the same as the preferred range of the content of water in the aqueous solvent constituting the aqueous dispersion of the present disclosure described above. As a solvent (i.e., an organic solvent) other than water that can be used for the aqueous solvent, the same organic solvent as the organic solvent in the aqueous solvent constituting the aqueous dispersion of the present disclosure described above can be used, and the preferred embodiments are also the same.

The ink of the present disclosure in which the solvent is an aqueous solvent is also referred to as aqueous ink.

The polymer (Pm) and the resin particles (Pp) contained as binders in the ink of the present disclosure are the same as those described in "1. Polymer" and "2. Resin particles", including preferred embodiments thereof, and the description thereof can be applied.

When used as a binder in the ink of the present disclosure, the polymer (Pm) preferably has a glass transition temperature of -40°C or higher from the viewpoint of excellent thermal stability of a resulting image, and preferably has a glass transition temperature of 50°C or lower from the viewpoint of excellent film formability at a low temperature. The glass transition temperature is more preferably 45°C or lower, and still more preferably 40°C or lower. Meanwhile, the lower limit is more preferably -35°C or higher, still more preferably -30°C or higher. The method for measuring the glass transition temperature is as described above. That is, the glass transition temperature of the polymer (Pm) contained in the ink of the present disclosure is preferably from -40 to 50°C, more preferably from -35 to 45°C, and still more preferably from -30 to 40°C.

The resin particles (Pp) preferably have a glass transition temperature in the same range for the same reason as in the case of the polymer (Pm).

The resin particles (Pp) used in the ink of the present disclosure preferably have a dispersion average particle size of 10 nm or more and 1 μm or less from the viewpoint of excellent image uniformity. The lower limit thereof is more preferably 50 nm or more, still more preferably 150 nm or more. Meanwhile, the upper limit is more preferably 500 nm or less, still more preferably 350 nm or less. The method for measuring the dispersion average particle size and the like are the same as the method for measuring the dispersion average particle size of the resin particles (Pp) in the aqueous dispersion.

The binder may contain one type or two or more types of the polymer (Pm), one type or two or more types of the resin particles (Pp), or one type or two or more types of the polymer (Pm) and one type or two or more types of the resin particles (Pp). Among them, the binder preferably contains at least resin particles (Pp), and more preferably, the resin particles (Pp) are aqueous emulsion particles.

The binder may contain an additional binder component other than the polymer (Pm) and the resin particles (Pp), but the total content of the polymer (Pm) (excluding the polymer (Pm) contained in the resin particles (Pp)) and the resin particles (Pp) is preferably from 50 to 100 mass%, more preferably 80 mass% or more, still more preferably 95 mass% or more, and particularly preferably 100 mass% per 100 mass% of the binder. In particular, the content of the resin particles (Pp) is preferably adjusted to the above range.

The additional binder component other than the polymer (Pm) and the resin particles (Pp) is not particularly limited, and known materials can be used. Examples of the material that can be used as the additional binder component include a vinyl-based resin, a (meth)acrylic-based resin, an olefinic-based resin, a urethane-based resin, a fluorine-based resin, a silicone-based resin, an epoxy resin, a phenoxy resin, a phenol resin, a xylene resin, and a blocked isocyanate. The material that can be used as the additional binder component may be in the form of being dissolved in a solvent or may be in the form of particles like the resin particles (Pp).

When the ink of the present disclosure is an aqueous ink, the binder preferably contains at least the resin particles (Rp), and more preferably contains the aqueous emulsion particles. That is, an ink containing a binder and a solvent, wherein the solvent is an aqueous solvent, and the binder contains the resin particles (Pp), is one of preferred embodiments of the ink of the present disclosure. Further, an ink containing a binder and a solvent, wherein the solvent is an aqueous solvent, and the binder contains the aqueous emulsion particles is one of more preferred embodiments of the ink of the present disclosure.

The content of each component contained in the ink of the present disclosure is not particularly limited. The content of the binder in the ink of the present disclosure is preferably from 1 to 70 mass% per 100 mass% of the ink. When the content is less than 1 mass%, there is a possibility that performance such as adhesion degrades, whereas when the content is more than 70 mass%, there is a possibility that workability degrades due to high viscosity. The content is more preferably 5 mass% or more and 65 mass% or less.

The amount of the binder contained in the solid content of the ink of the present disclosure is preferably from 4 to 100 mass%, more preferably from 20 to 99 mass%, and still more preferably from 30 to 98 mass%. When the ink of the present disclosure is a coloring ink containing a pigment, the amount of the binder contained in the solid content of the ink is preferably from 4 to 100 mass%, more preferably from 10 to 80 mass%, still more preferably from 20 to 60 mass%, and further still more preferably from 30 to 50 mass%. When the ink of the present disclosure is a clear ink containing no pigment, the amount of the binder contained in the solid content of the ink is preferably from 4 to 100 mass%, more preferably from 50 to 99 mass%, still more preferably from 60 to 98 mass%, and further still more preferably from 70 to 98 mass%. In the present specification, the solid content refers to the component excluding a solvent.

The content of the solvent in the ink of the present disclosure is preferably from 30 to 99 mass%, and more preferably from 35 to 95 mass% per 100 mass% of the ink of the present disclosure. The content of the solvent means the total content of the solvents contained in the ink of the present disclosure.

The ink of the present disclosure may optionally contain, besides the above-described components, a pigment, a crosslinking agent, an additional component, or the like described below.

The ink of the present disclosure preferably further contains a pigment. The hue of the ink can be adjusted by incorporating the pigment. In the present specification, an ink containing a pigment may be referred to as "coloring ink". The ink of the present disclosure may be a clear ink containing no pigment.

The hue of the pigment is not particularly limited, and it may be selected from black, white, and chromatic colors. The chromatic colors include colors having different densities such as light cyan, dark yellow, light magenta, and light black in addition to magenta, yellow, and cyan, which are three primary colors of subtractive color mixture. Further, the hue may be one or more hues selected from red, blue, orange, green, and violet. In the present specification, a pigment exhibiting a white hue may be referred to as white pigment, and a pigment exhibiting a hue other than white (chromatic color or black) may be referred to as color pigment.

As the pigment, a known pigment can be used. Examples of the pigment include organic pigments and inorganic pigments, and these pigments may be used singly or in combination of two or more types thereof. As necessary, they can be used in combination with an extender pigment.

Examples of the organic pigment include azo pigments such as benzidine and Hansa yellow; diazo pigments; azomethine pigments; methine pigments; anthraquinone pigments; phthalocyanine pigments such as phthalocyanine blue; perinone pigments; perylene pigments; diketopyrrolopyrrole pigments; thioindigo pigments; iminoisoindoline pigments; isoindolinone pigments such as iminoisoindolinone; dioxazine pigments; quinacridone pigments such as Quinacridone Red and Quinacridone Violet; flavanthrone pigments; indanthrone pigments; anthrapyrimidine pigments; carbazole pigments; Monoarylide Yellow; Diarylide Yellow; Benzimidazolone Yellow; Tolyl Orange; Naphthol Orange; and quinophthalone pigments.

The hue of the organic pigment is not particularly limited, and any chromatic pigment such as yellow, magenta, cyan, blue, red, orange, or green can be used. Specific examples thereof include products of product numbers such as C.I. Pigment Yellow, C.I. Pigment Red, C.I. Pigment Orange, C.I. Pigment Violet, C.I. Pigment Blue, and C.I. Pigment Green. When a polypropylene base material such as a polypropylene fabric is used, it is preferred to use a metal-free pigment as the organic pigment so as not to promote thermal decomposition of polypropylene. Specifically, Pigment Blue 16 or the like can be selected.

Examples of the inorganic pigment include titanium dioxide, antimony trioxide, zinc oxide such as zinc white, lithopone, lead white, red iron oxide, black iron oxide, chromium oxide green, carbon black, chrome yellow, molybdenum red, ferric ferrocyanide (Prussian blue), ultramarine, and lead chromate. Examples of the inorganic pigment also include pigments having a flat shape, such as mica, clay, aluminum powder, talc, and aluminum silicate; and extender pigments such as calcium carbonate, magnesium hydroxide, aluminum hydroxide, barium sulfate, and magnesium carbonate. Examples of carbon black include furnace black, thermal lamp black, acetylene black, and channel black.

Among the inorganic pigments, preferred examples of the white pigment include titanium dioxide, antimony trioxide, zinc oxide such as zinc white, lithopone, lead white, calcium carbonate, magnesium hydroxide, aluminum hydroxide, barium sulfate, magnesium carbonate, clay, talc, and aluminum silicate. Among them, titanium dioxide is preferred from the viewpoint of having a high refractive index and excellent concealing properties. Among the titanium dioxide, titanium dioxide having a rutile crystal structure is preferred.

Preferred examples of color pigments include the above-described organic pigments, red iron oxide, black iron oxide, chromium oxide green, carbon black, chrome yellow, molybdenum red, ferric ferrocyanide (Prussian blue), ultramarine, and lead chromate.

From the viewpoints of dispersion stability and color developability or concealment properties, the average particle size of the pigment is preferably from 10 to 1000 nm, and more preferably from 20 to 500 nm. In the case of a white pigment, the average particle size is preferably from 100 to 500 nm, more preferably from 150 to 450 nm, and still more preferably from 200 to 400 nm from the viewpoint of more excellent concealment property. In the case of a color pigment, the average particle size is preferably from 20 to 200 nm, more preferably from 40 to 150 nm, and still more preferably from 50 to 100 nm, particularly from the viewpoint of color developability.

The average particle size is preferably a dispersion average particle size of the pigment in the ink of the present disclosure. The dispersion average particle size of the pigment can be measured by a measurement method using a laser diffraction scattering type particle size distribution meter or a dynamic light scattering method, similarly to the dispersion average particle size of the resin particles (Pp) in the aqueous dispersion of the present disclosure. In particular, it is preferred to adopt a particle size distribution measuring instrument (available from OTSUKA ELECTRONICS CO., LTD., product number: nanoSAQLA) by a dynamic light scattering method, to determine an autocorrelation function by a photon correlation method, and to use an average particle size (hydrodynamic size) determined by a cumulant analysis. However, when it is difficult to perform measurement by a dynamic light scattering method in the case of, for example, a black pigment, a 50% particle size in a volume-based particle size distribution obtained by a measurement method using a laser diffraction scattering type particle size distribution meter can be used as the average particle size.

The pigment is preferably dispersed and stabilized with a dispersant in the ink of the present disclosure. That is, the ink of the present disclosure preferably contains a dispersant together with the pigment. Examples of the dispersant include poly(meth)acrylic acids (salts) such as poly(meth)acrylic acid and poly(meth)acrylic acid salt; copolymers of (meth)acrylic acid (salt) and one type or two or more types of ethylenically unsaturated double bond-containing monomers such as (meth)acrylic acid ester, (meth)acrylonitrile, (meth)acrylamide, styrene, maleic acid, maleic anhydride, maleic acid ester, and vinyl acetate; polyvinyl alcohol; and polyvinylpyrrolidone.

The content of the dispersant is not particularly limited, but is preferably from 1 to 50 parts by mass per 100 parts by mass of the pigment.

When the ink of the present disclosure contains a pigment, the content of the pigment is not particularly limited, but is preferably from 1 to 40 mass% per 100 mass% of the ink. When the content is less than 1 mass%, there is a possibility that color developability is insufficient, whereas when the content is more than 40 mass%, there is a possibility that a coating film becomes brittle. The content is more preferably 2 mass% or more and 35 mass% or less.

When the ink of the present disclosure contains a pigment, the content of the pigment is preferably from 10 to 400 parts by mass, more preferably from 20 to 300 parts by mass, and still more preferably from 30 to 200 parts by mass, per 100 parts by mass of the binder.

The ink of the present disclosure can further contain a crosslinking agent. Containing a crosslinking agent makes it easy to form a tough coating film by exhibiting a crosslinking action through interaction with a component contained in the ink of the present disclosure, for example, the polymer (Pm) and/or the resin particles (Pp), or a pigment when the ink contains a pigment, a dispersant, or the like, or through a chemical reaction.

The crosslinking agent may start a crosslinking reaction at normal temperature, or may start a crosslinking reaction with heat. Examples of preferred crosslinking agents include an oxazoline group-containing compound, an isocyanate group-containing compound, an aminoplast resin, a polyvalent metal compound, and a carbodiimide compound. These crosslinking agents may be used singly or in combination of two or more types thereof.

Among these crosslinking agents, an oxazoline group-containing compound is preferred from the viewpoint of excellent crosslinking performance. The oxazoline group-containing compound means a compound having two or more oxazoline groups in the molecule. Examples of the oxazoline group-containing compound include, but are not limited to, 2,2'-bis(2-oxazoline), 2,2'-methylene-bis(2-oxazoline), 2,2'-ethylene-bis(2-oxazoline), 2,2'-trimethylene-bis(2-oxazoline), 2,2'-tetramethylene-bis(2-oxazoline), 2,2'-hexamethylene-bis(2-oxazoline), 2,2'-octamethylene-bis(2-oxazoline), 2,2'-ethylene-bis(4,4'-dimethyl-2-oxazoline), 2,2'-p-phenylene-bis(2-oxazoline), 2,2'-m-phenylene-bis(2-oxazoline), 2,2'-m-phenylene-bis(4,4'-dimethyl-2-oxazoline), bis(2-oxazolinylcyclohexane) sulfide, bis(2-oxazolinylnorbornane) sulfide, and oxazoline group-containing polymers. These oxazoline group-containing compounds may be used singly or in combination of two or more types thereof.

Among the oxazoline group-containing compounds, water-soluble oxazoline group-containing compounds and/or oxazoline group-containing polymers are preferred, and water-soluble oxazoline group-containing polymers are more preferred from the viewpoint of excellent crosslinking performance. The oxazoline group-containing polymer can be produced by a known production method. Examples of the production method include a method of polymerizing a monomer component containing one type or two or more types of addition polymerizable oxazolines or a monomer copolymerizable with addition polymerizable oxazoline. The copolymerizable monomer is preferably a monomer that is copolymerizable with an addition polymerizable oxazoline without having a functional group that reacts with an oxazoline group. Examples of the monomer can include a monomer not having a functional group that reacts with an oxazoline group in the ethylenically unsaturated double bond-containing monomer (specifically, the monomer exemplified as the monomer constituting the polymer (Pm)). Examples of the monomer include vinyl-based monomers such as vinyl acetate, vinyl chloride, and vinyl benzoate; acrylonitrile; (meth)acrylamide-based monomers such as acrylamide; (meth)acrylic-based monomers such as (meth)acrylic acid ester (preferably, (meth)acrylic acid linear alkyl ester or (meth)acrylic acid branched alkyl ester); styrenic-based monomers such as styrene, $\alpha$-methylstyrene, and chloromethylstyrene; and olefinic-based monomers such as ethylene and propylene.

Examples of the addition polymerizable oxazoline include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Among the oxazoline group-containing polymers, a water-soluble oxazoline group-containing polymer is preferred, and the polymer can be produced by the same method as the method for producing the oxazoline group-containing polymer. Examples of the water-soluble oxazoline group-containing polymer include polymers that have an acrylic-based polymer, an acrylic-styrenic-based polymer, or the like as a main chain and contain an oxazoline group in a side chain.

A commercially available product can be used as the oxazoline group-containing polymer. Examples of the commercially available product include water-soluble polymers such as trade name: EPOCROS WS-500 and EPOCROS WS-700 available from NIPPON SHOKUBAI CO., LTD., and emulsion-type polymers such as EPOCROS K-2010, EPOCROS K-2020, and EPOCROS K-2030 available from NIPPON SHOKUBAI CO., LTD. Among these, water-soluble polymers such as trade name: EPOCROS WS-500 and EPOCROS WS-700 available from NIPPON SHOKUBAI CO., LTD. are preferred.

When the ink of the present disclosure contains a crosslinking agent, the content of the crosslinking agent is not particularly limited, but is preferably from 0.1 to 30 parts by mass per 100 parts by mass of the binder. When the content is less than 0.1 parts by mass, the coating film strength may be difficult to improve, whereas when the content is more than 30 parts by mass, the water resistance may degrade. The content is more preferably 0.2 parts by mass or more and 20 parts

by mass or less. From the viewpoint of improving the coating film strength, the content is preferably from 0.5 to 10 parts by mass, and more preferably 5 parts by mass or less per 100 parts by mass of the binder. That is, the content of the crosslinking agent is preferably from 0.1 to 30 parts by mass, more preferably from 0.2 to 20 parts by mass, still more preferably from 0.5 to 10 parts by mass, and particularly preferably from 0.5 to 5 parts by mass per 100 parts by mass of the binder.

The ink of the present disclosure may further contain an additional component besides the binder component, the solvent, the pigment, and the crosslinking agent described above, as long as the object of the present invention is not impaired. For example, the ink may contain an additive such as a surfactant, a dispersant, a leveling agent, an ultraviolet absorber, an ultraviolet stabilizer, a thickener, a wetting agent, a plasticizer, a stabilizer, an antifoaming agent, a dye, an antioxidant, a crosslinking promoter, a PH adjuster, or a preservative in an appropriate amount.

The leveling agent to be used is preferably, for example, an acetylene glycol-based, silicone-based, or fluorine-based surfactant. Among them, a polyether-modified silicone compound is preferred.

When the aforementioned additional component is added, the content thereof is not particularly limited, but is preferably 2 mass% or less, and more preferably 1 mass% or less per 100 mass% of the ink of the present disclosure. To exhibit the addition effect, the content is preferably 0.01 mass% or more, and more preferably 0.05 mass% or more.

The method for producing the ink of the present disclosure is not particularly limited. The ink can be produced by mixing a binder and a solvent with a pigment, a crosslinking agent, and an additive, which are used as necessary.

In a preferred embodiment, it is preferred that an aqueous dispersion containing the resin particles (Pp) (preferably an aqueous emulsion containing aqueous emulsion particles) is prepared in advance, and the aqueous dispersion (preferably an aqueous emulsion) is mixed with other components. In the preparation of the ink containing a pigment, it is preferred to prepare a pigment dispersion containing a pigment in advance, and to mix the aqueous dispersion (preferably, aqueous emulsion), the pigment dispersion, and other components such as a crosslinking agent.

Hereinafter, an example of production of an aqueous ink using aqueous emulsion particles as a binder will be described.

First, an emulsion containing aqueous emulsion particles is prepared. The emulsion containing aqueous emulsion particles can be produced by a known emulsion polymerization method as described above. For example, emulsion polymerization is performed in an aqueous medium using a polymerizable monomer composition containing the polymerizable monomer (M) as a raw material to prepare an aqueous emulsion in which aqueous emulsion particles containing the polymer (Pm) (preferably the resin (Pp)) of the present disclosure are dispersed in an aqueous solvent at a predetermined proportion. The content of the aqueous emulsion particles in the aqueous emulsion is not particularly limited, but is preferably from 30 to 65 mass% per 100 mass% of the aqueous emulsion. The aqueous emulsion obtained by the emulsion polymerization method usually contains an emulsifier such as a surfactant used for emulsification, but the aqueous emulsion may be used as is as an aqueous emulsion for preparing the ink of the present disclosure.

In the preparation of an ink containing a pigment, it is preferred to prepare a pigment dispersion. The pigment dispersion can be produced by mixing a pigment and a dispersant in water or an aqueous solvent and performing a dispersion treatment with a bead mill or the like. The content of the pigment in the pigment dispersion is not particularly limited, but is preferably from 15 to 65 mass% per 100 mass% of the pigment dispersion. The content of the dispersant is not particularly limited, but is preferably from 1 to 10 parts by mass per 100 parts by mass of the pigment in the pigment dispersion.

Next, the aqueous emulsion and other components such as the pigment dispersion and the crosslinking agent to be used as necessary are mixed to prepare a mixture. Upon mixing, as the other components such as the crosslinking agent, the components may be used as they are, or a solution diluted with a solvent may be used. The method and order of mixing the above components are not particularly limited.

For example, when a pigment dispersion and a crosslinking agent are used as other components, the aqueous emulsion and the pigment dispersion may be mixed, and then the crosslinking agent may be mixed. Alternatively, the aqueous emulsion may be mixed after the pigment dispersion and the crosslinking agent are mixed, or the aqueous emulsion and the crosslinking agent may be mixed, and then the pigment dispersion may be mixed, or the pigment dispersion, the aqueous emulsion, and the crosslinking agent may be mixed almost simultaneously.

A solvent (solvent for adjustment) can be further added to the mixture for the purpose of adjusting the concentration of each component in the ink of the present disclosure or adjusting the physical properties of the ink. As the solvent, water, an organic solvent such as a glycol, a mixture of water and an organic solvent, or the like can be used. Components such as additives other than those described above may be further mixed. The timing of mixing these solvents (solvents for adjustment), additives, and the like may be appropriately selected. After the components are mixed, centrifugation, filter filtration, or the like can be performed as necessary.

The above-described production method can produce an aqueous ink containing aqueous emulsion particles and an aqueous solvent (e.g., an aqueous ink containing a pigment, aqueous emulsion particles, a crosslinking agent, and an aqueous solvent). Although an example of the method for producing the ink of the present disclosure has been described, the method is not limited to the example described above.

5. Method for Producing Printed Matter

The method for producing a printed matter of the present disclosure will be described.

In the method for producing a printed matter of the present disclosure, the ink of the present disclosure is used. That is, the method for producing a printed matter of the present disclosure is a method for producing a printed matter in which an image is printed on a base material, the method including an image formation step of forming the image by attaching the ink of the present disclosure described above to the base material.

Thus, the printed matter obtained by the method for producing a printed matter of the present disclosure is excellent in adhesion to the base material. In particular, when the base material is made of a polyolefin, it is easy to obtain a printed matter having more excellent adhesion to the base material.

The ink used in the method for producing a printed matter of the present disclosure is an ink containing a binder and a solvent, characterized in that the binder contains the polymer (Pm) of the present disclosure and/or the resin particles (Pp) of the present disclosure (preferably contains the resin particles (Pp) of the present disclosure).

The specific configuration of the ink (e.g., the type and amount of the solvent and binder contained in the ink), including preferred embodiments thereof, is the same as the specific configuration of the ink (e.g., the type and amount of the solvent and binder contained in the ink) described in "4. Ink", including preferred embodiments thereof, and the description thereof can be applied as it is. From the viewpoint of low environmental load, the ink used in the method for producing a printed matter of the present disclosure is preferably an aqueous ink.

The base material is not particularly limited, but is preferably a fabric, a polymer film, a polymer molded body, or the like. The term fabric as used herein includes all textile products such as cloth and woven fabric in which natural fibers and/or synthetic fibers are used as the original yarn. Examples of the fabric include woven fabrics, nonwoven fabrics, and knitted fabrics. The fibers constituting the fabric are not particularly limited, and examples thereof include natural fibers, chemical fibers, and mixtures thereof. Hereinafter, a printed matter obtained using a fabric as a base material may be referred to as "textile printed matter".

Preferred examples of the natural fibers include silk, cotton, and wool.

Examples of the chemical fibers include synthetic fibers, recycled fibers, and semi-synthetic fibers. Preferred examples of the synthetic fibers include polyester fibers, nylon fibers, acrylic fibers, polyurethane fibers, polyolefin fibers such as polyethylene fibers and polypropylene fibers, and vinylon fibers. Preferred examples of the recycled fibers include rayon. Preferred examples of the semi-synthetic fibers include acetate and triacetate.

When the base material is a fabric, the fabric is preferably a fabric containing at least one type of fibers selected from the group consisting of polyolefin fibers such as polyethylene fibers and polypropylene fibers, polyester fibers, and cotton, more preferably a fabric containing polyolefin fibers, and still more preferably a fabric containing polypropylene fibers.

In particular, when the fabric used as the base material is a nonwoven fabric, examples of the material thereof include polyolefins such as polyethylene and polypropylene, rayon, cotton, and celluloses. Among them, polyolefins are preferred, and polypropylene is particularly preferred.

When the base material is a polymer film, examples of the material thereof include polyolefins, polyester resins, amide resins, (meth)acrylic resins, polyurethane resins, polyvinyl alcohol resins, and celluloses. In particular, when the base material is a polymer film, a polyolefin film or a polyester film is preferred as the base material. Preferred examples of the polyolefin film include a polyethylene film and a polypropylene film. Preferred examples of the polypropylene film include CPP (non-oriented polypropylene) OPP (biaxially oriented polypropylene), and OPP is particularly preferred. As the polyester film, a polyethylene terephthalate film is preferred.

Examples of the polymer molded body include a styrene butadiene rubber (SBR) plate, polyolefin plates such as a polyethylene plate, and a polypropylene plate. A polyolefin plate is preferred, and a polypropylene plate is particularly preferred.

In particular, the ink of the present invention is suitably used for a base material made of a polyolefin. In the present specification, a base material made of a polyolefin may be referred to as polyolefin base material.

Examples of the polyolefin base material include a fabric such as a woven fabric, a nonwoven fabric, or a knitted fabric made of polyolefin fibers (e.g., polyethylene fibers or polypropylene fibers); a film composed of a polyolefin (e.g., polyethylene or polypropylene); and a molded article of a polyolefin such as a polyolefin plate (e.g., a polyethylene plate or a polypropylene plate).

Among the polyolefin base materials, a fabric made of polyolefin fibers and a film made of a polyolefin are preferred, and a fabric made of polyethylene fibers, a fabric made of polypropylene fibers, a polyethylene film, and a polypropylene film are more preferred.

In the base material, the surface on which the ink of the present invention is to be printed may be chemically or physically modified by corona treatment, anchor coating treatment, or the like. As a result, adhesion to an image formed from the ink of the present invention further improves. Specific examples thereof include a corona-treated polyolefin film.

The method for forming an image by attaching the ink of the present disclosure to the base material is not

particularly limited, but for example, the method is preferably at least one printing method selected from the group consisting of a silk screen printing method, a spray printing method, a relief printing method, an intaglio printing method such as gravure printing, a flat plate printing method such as offset printing, and an inkjet printing method. By performing an image formation step of attaching the ink of the present disclosure to the base material using the printing method, a base material on which the image is formed on the base material can be obtained.

Among the printing methods used in the method for producing a printed matter of the present disclosure, an inkjet printing method is preferred. The inkjet printing method means a printing method using an inkjet printer. The inkjet printer is not particularly limited, and a known inkjet printer can be used. As the inkjet printer, for example, any type such as a piezo type, a thermal type, and a charge change control type (continuous ejection type) can be used. Among them, a piezo type inkjet printer is preferred. When the piezo type inkjet printer is used, the ink ejection conditions and the like are not particularly limited. The conditions thereof may be appropriately selected depending on the properties of the ink of the present disclosure, the type of a base material, the type of an image to be printed, and the like. When the inkjet printing method is adopted, the viscosity of the ink of the present disclosure is preferably in a range of from 2 to 20 mPa/s. When the inkjet printing method is adopted, the surface tension of the ink of the present disclosure is preferably in a range of from 25 to 45 mN/m.

In the image formation step, the ink ejected from the nozzle opening of the inkjet printer head adheres to the surface of the base material to form an image. The base material on which the image is formed by the inkjet printing method is preferably subjected to a heat treatment as described below. The heating method, the timing of the heating treatment, the heating temperature, and the like are as described below, including preferred embodiments thereof. When the printing method using the inkjet printer is adopted, an article obtained by printing any image such as a character, a pattern, or a figure on a base material such as a fabric or a polymer film can be easily obtained in addition to the effect obtained by using the ink of the present disclosure described above.

The method for producing a printed matter of the present disclosure preferably includes a step of heating (also referred to as heat treatment step). That is, it is preferred to heat the base material on which the image is formed by the above-described method. Through the heat treatment, removal of volatile components such as an aqueous solvent derived from the ink contained in the image formed on the base material can be promoted, and fixing of the image can be promoted by melting the binder component contained in the ink.

The heat treatment step may be performed simultaneously with or after the image formation step. Both steps may be combined. Examples of the method of performing the heat treatment step simultaneously with the image formation step include a method of performing the image formation step while heating the base material. Preferred examples of the heat treatment method in the case of performing the heat treatment step after the image formation step include a heating method using a heating drying furnace, a heating method using a heat press, a heating method using an infrared lamp, a hot plate method using electric heat, and a method using steam such as normal pressure steam or high pressure steam. Among them, as the heating method, it is preferred to perform the heating treatment step after image formation because there is a possibility that air flow is disturbed when the steps are performed simultaneously.

The heating temperature is not particularly limited, but is preferably from 60 to 180°C. The upper limit is more preferably 150°C or lower, still more preferably 110°C or lower, and the lower limit is more preferably 70°C or higher, still more preferably 80°C or higher. The heating time is not particularly limited, but is preferably from 0.5 to 30 minutes. The upper limit is more preferably 20 minutes or less, still more preferably 10 minutes or less, and the lower limit is more preferably 1 minute or more, still more preferably 2 minutes or more. When the base material is a fabric, the heating temperature and time vary depending on the material of the fabric in the heat treatment step. For example, the heating temperature is from 120 to 190°C (preferably 160°C) for cotton, from 70 to 130°C (preferably 125°C) for polypropylene, and from 110 to 170°C (preferably 110°C) for polyester. The heating time is preferably within 5 minutes in each case.

When the base material is a fabric, a printed matter (textile printed matter) including an image formed on the fabric obtained after the heat treatment step may be washed with water and dried.

Through the above-described method for producing a printed matter, a printed matter excellent in adhesion of a printed image can be produced in an environmentally friendly manner while saving energy. In particular, even when the base material is a polyolefin, a printed matter excellent in image adhesion can be obtained.

## 6. Article With Fixed Image

An article with a fixed image of the present disclosure will be described.

The article with a fixed image of the present disclosure is an article with a fixed image in which an image containing a pigment and a resin is fixed to a part or the whole of a base material, characterized in that the resin contains the polymer (Pm) containing a structure derived from the polymerizable monomer (M) represented by Formula (1) as a constituent unit.

The resin contains the polymer (Pm) containing a structure derived from the polymerizable monomer (M) represented by Formula (1) as a constituent unit.

The polymer (Pm) contained in the resin is the same as the polymer (Pm) described in "1. Polymer" including

preferred embodiments thereof, and the description in "1. Polymer" can be applied as it is.

The resin may be resin particles containing only the polymer (Pm) as a resin component, or may be resin particles containing a resin component other than the polymer (Pm). The resin component other than the polymer (Pm) of the present disclosure is also referred to as additional resin component. The additional resin component is not particularly limited, and examples thereof include vinyl-based resins, (meth)acrylic-based resins, olefinic-based resins, urethane-based resins, fluorine-based resins, silicone-based resins, epoxy resins, phenoxy resins, phenol resins, xylene resins, and blocked isocyanates. The additional resin component is preferably the polymer (Pm2). The polymer (Pm2) including preferred embodiments thereof is the same as the polymer (Pm2) described in "2. Resin particles", and the description in "2. Resin particles" can be applied as it is. From the viewpoint of adhesion, the additional resin component is preferably an olefinic-based resin.

The content of the polymer (Pm) contained in the resin is not particularly limited, but is preferably 50 mass% or more, more preferably 80 mass% or more, still more preferably 95 mass% or more, and particularly preferably 100 mass% per 100 mass% of the resin.

The pigment is the same as the pigment that may be contained in the ink of the present disclosure described in "4. Ink", including preferred embodiments thereof, and the description in "4. Ink" can be applied as it is.

The image contains the resin and the pigment. The total content of the resin and the pigment in the image is preferably from 70 to 100 mass%, more preferably from 90 to 100 mass%, and still more preferably from 95 to 100 mass% per 100 mass% of the image. The content of the resin in the image is preferably 20 mass% or more and less than 100 mass%, more preferably from 25 to 90 mass%, and still more preferably from 30 to 85 mass% per 100 mass% of the total content of the resin and the pigment in the image.

The image may be fixed to a part or the whole of the base material.

The thickness of the image is not particularly limited, but is preferably from 0.1 to 1000 μm, more preferably from 0.3 to 500 μm, and still more preferably from 0.5 to 100 μm. As the thickness, for example, a value measured through observation with a laser microscope or the like can be adopted.

The image may contain an additional component other than the resin and the pigment. For example, an additive such as a crosslinking agent, a surfactant, a dispersant, a leveling agent, an ultraviolet absorber, an ultraviolet stabilizer, a thickener, a wetting agent, a plasticizer, a stabilizer, an antifoaming agent, a dye, an antioxidant, a crosslinking accelerator, a PH adjuster, and a preservative may be contained in an appropriate amount. The content of the additional component is not particularly limited, but is preferably 30 mass% or less, more preferably 10 mass% or less, and still more preferably 5 mass% or less per 100 mass% of the image. To exhibit the addition effect, the content is preferably 0.01 mass% or more, and more preferably 0.05 mass% or more.

The base material is the same as the base material that is the print medium described in "5. Method for producing printed matter", including preferred embodiments thereof, and the description in "5. Method for producing printed matter" can be applied as it is.

The method for producing the article with a fixed image of the present disclosure is not particularly limited, but for example, the above-described method for producing a printed matter of the present disclosure can be used. Preferred embodiments of the production method are the same as the production method described in "5. Method for producing printed matter" and preferred embodiments thereof, and the description in "5. Method for producing printed matter" can be applied as it is.

The article with a fixed image of the present disclosure has been described above. The article with a fixed image of the present disclosure has excellent image adhesion. In particular, even when the base material is a polyolefin base material (e.g., a film, a molded body, or a nonwoven fabric made of a polyolefin, or a fabric made of fibers), the article is excellent in adhesion of an image to the base material.

7. Compound

The compound of the present disclosure will be described. The compound of the present disclosure is represented by Formula (2) described below.

[Chem. 15]

$$A^3\text{-}(OA^4)_m\text{-}O\text{-}X^2 \qquad (2)$$

In the above formula, $A^3$ represents a hydrocarbon group containing two or more aromatic ring skeletons, the hydrocarbon group optionally has a substituent, and the substituent is a nonionic substituent.

$A^4$ represents an alkylene chain having from 1 to 10 carbons, and the alkylene chain optionally has a substituent. A plurality of $A^4$ may be the same or different.

m is an integer of from 3 to 100.

$X^2$ represents a group having an ethylenically unsaturated double bond.

The compound is the same as the compound represented by Formula (1) (i.e., the polymerizable monomer (M)) described in "1. Polymer", including preferred embodiments thereof, and the description about the polymerizable monomer (M) can be applied as it is. That is, the compound of the present disclosure can be suitably used as a polymerizable monomer, and a polymer containing a structural unit derived from the compound of the present disclosure is excellent in adhesion to a polyolefin base material. Thus, when the compound of the present disclosure is applied to a polymer for ink, an image excellent in adhesion to a polyolefin base material can be printed.

For example, a specific embodiment and a preferred embodiment of each of $A^3$, $A^4$, $X^2$, and m in Formula (2) are the same as the specific embodiment and the preferred embodiment of each of $A^1$, $A^2$, $X^1$, and n in Formula (1), and the description thereof can be applied as it is.

For example, in the compound of the present disclosure, the "hydrocarbon group containing two or more aromatic ring skeletons" represented by $A^3$ is preferably at least one selected from the group consisting of the structures represented by Formulae (1-a) to (1-f) shown as preferred structures of the hydrocarbon group containing two or more aromatic ring skeletons represented by $A^1$ in Formula (1) (i.e., a polycyclic phenyl group), and more preferably a structure represented by Formula (1-a).

Since the compound of the present disclosure has a structure other than $X^2$ in Formula (2), i.e., a structure of $A^3$-$(OA^4)_m$-O-, the compound itself tends to be excellent in adhesion to a base material made of a polyolefin. As illustrated in the description of the polymerizable monomer (M) constituting the polymer of the present disclosure, a polymer obtained by polymerizing the compound of the present disclosure as a polymerizable monomer component has, as its side chain, the above structure (structure composed of $A^3$-$(OA^4)_m$-O-), particularly, a structure (terminal structure) represented by $A^3$-$(OA^4)_2$-, and thus has excellent adhesion to a base material made of a polyolefin.

As a method for estimating the adhesion of the polymer containing the compound of the present disclosure to a base material, a calculation method of applying B3LYP as a functional of a density functional method, 6-31G(d, p) as a basis function, and dispersion force correction (GD3BJ keyword) using Gaussian 16 program available from Gaussian Inc., can be adopted. In the calculation method, the zero-point energy of the terminal structure of the compound of the present disclosure is substituted by the zero-point energy of a molecule having the same structure as the terminal structure, specifically, a molecule represented by Formula (2-1) described below (hereinafter, also referred to as structure molecule (I)), and it has been found that there is a correlation between the magnitude of the difference between the sum of the absolute value of the zero-point energy of the structure molecule (I) and the absolute value of the zero-point energy of the base material molecule and the absolute value of the zero-point energy of the association of the structure molecule (I) and the base material molecule, which are obtained by the calculation method, and the adhesion of the polymer using the compound of the present disclosure to the base material.

[Chem. 16]

$$A^3\text{-}(OA^4)_2\text{-}OCH_3 \qquad (2\text{-}1)$$

In the above formula, $A^3$ and $A^4$ are the same as $A^3$ and $A^4$ in Formula (2), respectively.

$A^3$ in Formula (2-1) is preferably the same as $A^3$ in Formula (2), and $(OA^4)_2$ in Formula (2-1) is preferably the same as continuous $(OA^4)_2$ directly bound to $A^3$ in Formula (2).

Specifically, the compound of the present disclosure preferably satisfies Formula (f2-1) described below.

$$(E_M + E_{P8}) - (E_{MP}) < -80 \text{ kJ/mol} \quad (f2\text{-}1)$$

In Formula (f2-1), $E_M$ is the absolute value of the zero-point energy of the structure molecule (I), $E_{P8}$ is the absolute value of the zero-point energy of the propylene octamer, $E_{MP}$ is the absolute value of the zero-point energy of the association of the structure molecule (I) and the propylene octamer, and the structure molecule (I) has the structure represented by Formula (2-1) when the compound is represented by Formula (2).

Formula (f2-1) means that the difference d10 between the sum of the absolute value ($E_M$) of the zero-point energy of the structure molecule (I) and the absolute value ($E_{P8}$) of the zero-point energy of the propylene octamer and the absolute value ($E_{MP}$) of the zero-point energy of the association of the structure molecule (I) and the propylene octamer is less than -80 kJ/mol.

The zero-point energy of the association means the zero-point energy when the structure molecule (I) and the propylene octamer are in the same space.

In the compound of the present disclosure, when the absolute value ($E_M$) of the zero-point energy of the structure molecule (I) satisfies Formula (f2-1), the polymer having a structure derived from the compound having a corresponding terminal structure as a constituent unit tends to have more excellent adhesion to a polyolefin base material, particularly to a polypropylene base material. The difference d10 is preferably -85 kJ/mol or less, and more preferably -90 kJ/mol or less.

It is also preferred that the compound of the present disclosure satisfies Formula (f2-2) described below.

$$(E_M + E_{P8}) - (E_{MP}) < (E_{P6} + E_{P8}) - (E_{PP}) \quad (f2\text{-}2)$$

In Formula (f2-2), $E_M$, $E_{P8}$, and $E_{MP}$ have the same meanings as $E_M$, $E_{P8}$, and $E_{MP}$ in Formula (f2-1), respectively, and they are values calculated in the same manner.

In Formula (f2-2), $E_{P6}$ is the absolute value of the zero-point energy of the propylene hexamer, and $E_{PP}$ is the absolute value of the zero-point energy of the association of the propylene octamer and the propylene hexamer.

The zero-point energy of the association of the propylene octamer and the propylene hexamer means the zero-point energy when the propylene octamer and the propylene hexamer are in the same space.

Formula (f2-2) means that the difference d10 between the sum of the absolute value ($E_M$) of the zero-point energy of the structure molecule (I) and the absolute value ($E_{P8}$) of the zero-point energy of the propylene octamer and the absolute value ($E_{MP}$) of the zero-point energy of the association of the structure molecule (I) and the propylene octamer is smaller (larger by a negative value) than the difference d20 between the sum of the absolute value ($E_{P6}$) of the zero-point energy of the propylene hexamer and the absolute value ($E_{P8}$) of the zero-point energy of the propylene octamer and the absolute value ($E_{PP}$) of the zero-point energy of the association of the propylene hexamer and the propylene octamer.

In the compound of the present disclosure, when the absolute value ($E_M$) of the zero-point energy of the structure molecule (I) satisfies Formula (f2-2), the polymer having a structure derived from the compound having a corresponding terminal structure as a constituent unit tends to have more excellent adhesion to a polyolefin base material, particularly to a polypropylene base material.

In Formula (f2-2), the difference (d10 - d20) between the difference d10 and the difference d20 is preferably -15 kJ/mol or less, and more preferably -20 kJ/mol or less.

Method for producing compound

The method for producing the compound is not particularly limited, but a preferred production method will be described. The method for producing the compound described here can also be used as a method for producing the polymerizable monomer (M).

The compound can be obtained by reacting a compound (A) represented by Formula (3) described below with a compound (B) having an ethylenically unsaturated double bond and a group capable of reacting with a hydroxyl group.

[Chem. 17]

$$A^5\text{-}(OA^6)_z\text{-}OH \qquad (3)$$

In the above formula, $A^5$ represents a hydrocarbon group containing two or more aromatic ring skeletons, the hydrocarbon group optionally has a substituent, and the substituent is a nonionic substituent. $A^6$ represents an alkylene chain having from 1 to 10 carbons, and the alkylene chain optionally has a substituent. A plurality of $A^6$ may be the same or different. z is an integer of from 3 to 100.

The compound (A) is not particularly limited as long as it is represented by Formula (3).

In the same manner as in $A^3$ in the compound represented by Formula (2), $A^5$ is the same as the specific embodiment and the preferred embodiment of $A^1$ in Formula (1), including the specific embodiment and the preferred embodiment, and the description regarding $A^1$ can be applied as it is.

In the same manner as in $A^4$ in the compound represented by Formula (2), $A^6$ is the same as the specific embodiment and the preferred embodiment of $A^2$ in Formula (1), including the specific embodiment and the preferred embodiment, and the description regarding A2 can be applied as it is.

In the same manner as in m in the compound represented by Formula (2), z is the same as the specific embodiment and the preferred embodiment of n in Formula (1), including the specific embodiment and the preferred embodiment, and the description regarding n can be applied as it is.

As the compound (A), a commercially available product can also be used. Examples of preferred commercially available products include Newcol 714, Newcol 707, and Newcol 704 available from Nippon Nyukazai Co., Ltd., Neugen EA167 and Neugen EA137 available from DKS Co., Ltd., and EMULGEN A-60 and EMULGEN A-90 available from Kao Corporation.

The compound (B) is not particularly limited as long as it is a compound having a group capable of reacting with a hydroxyl group and a group having an ethylenically unsaturated double bond.

The group having an ethylenically unsaturated double bond is not particularly limited, but is preferably a radical polymerizable group. Examples thereof include a (meth)acryloyl group; a vinyl group; a styryl group; and an allyl group. Among them, a (meth)acryloyl group is preferred from the viewpoint of copolymerizability.

In particular, as the compound (B), it is preferred to use a compound having a group capable of reacting with a hydroxyl group and the $X^2$. In the production of the polymerizable monomer (M), it is preferred to use a compound having a

group capable of reacting with a hydroxyl group and the $X^1$ as the compound (B).

Examples of the group capable of reacting with a hydroxyl group include a carboxy group, an anhydrous carboxy group, an isocyanate group, and an ester group. Among them, an anhydrous carboxy group is preferred. This is because it easily reacts with the hydroxyl group of the compound (A) to form an ester bond even under mild conditions. It is economically preferred to perform transesterification with a methyl ester or the like or acid esterification of methacrylic acid.

The group having an ethylenically unsaturated double bond and the group capable of reacting with a hydroxyl group may be a combination sharing a part of each of the groups. For example, acrylic acid which is an example of the compound (B) has an acryloyl group "$CH_2$=CH-C(=O)-" which is a group having an ethylenically unsaturated double bond, and a carboxy group "-C(=O)OH" which is a group capable of reacting with a hydroxyl group, and the "-C(=O)" portion exists in an overlapping manner in each of the groups.

Examples of the compound (B) include (meth)acrylic acid, (meth)acrylic anhydride, 2-(meth)acryloyloxyethyl isocyanate, and (meth)acrylic acid esters (preferably (meth)acrylic acid $C_{1-4}$ alkyl esters) such as methyl (meth)acrylate. Among them, (meth)acrylic acid, (meth)acrylic anhydride, 2-methacryloyloxyethyl isocyanate, and methyl methacrylate are preferred, and (meth)acrylic anhydride and methyl methacrylate are more preferred.

The method and conditions for reacting the compound (A) with the compound (B) are not particularly limited, but, for example, a method of heating a mixture containing the compound (A) and the compound (B) or a method of obtaining the compound through transesterification of the compound (A) and a (meth)acrylic acid ester such as methyl methacrylate is preferred.

When an acid anhydride is used as the compound (B), a catalyst can coexist for the purpose of accelerating the reaction. Examples of the catalyst include tertiary amines such as triethylamine, tributylamine, N-methylpiperidine, N-methylmorpholine, 1,4-diazabicyclo[2.2.2]octane, 1,7-diazabicyclo[4.3.0]non-6-ene, 1,8-diazabicyclo[5.4.0]undec-7-ene, dimethylaniline, and dimethylaminopyridine; and nitrogen-containing heterocyclic aromatic compounds such as pyridine.

When (meth)acrylic acid is used as the compound (B), it is preferred to use a catalyst or a co-catalyst in the (meth) acrylation reaction. Examples of the catalyst or the co-catalyst include sulfonic acid compounds such as p-toluenesulfonic acid, benzenesulfonic acid, xylenesulfonic acid, methanesulfonic acid, and sulfuric acid.

When a (meth)acrylic acid ester such as a (meth)acrylate is used as the compound (B), it is preferred to use a transesterification catalyst in the transesterification reaction between the compound (A) and the (meth)acrylic acid ester. Any known transesterification catalyst can be used without particular limitation. Specific examples thereof include oxides such as calcium oxide, barium oxide, lead oxide, zinc oxide, and zirconium oxide; hydroxides such as potassium hydroxide, sodium hydroxide, lithium hydroxide, calcium hydroxide, thallium hydroxide, tin hydroxide, lead hydroxide, and nickel hydroxide; halides such as lithium chloride, calcium chloride, tin chloride, lead chloride, zirconium chloride, and nickel chloride; carbonates such as potassium carbonate, rubidium carbonate, cesium carbonate, lead carbonate, zinc carbonate, and nickel carbonate; hydrogen carbonates such as potassium hydrogen carbonate, rubidium hydrogen carbonate, and cesium hydrogen carbonate; phosphates such as sodium phosphate, potassium phosphate, rubidium phosphate, lead phosphate, zinc phosphate, and nickel phosphate; nitrates such as lithium nitrate, calcium nitrate, lead nitrate, zinc nitrate, and nickel nitrate; carboxylates such as lithium acetate, calcium acetate, lead acetate, zinc acetate, and nickel acetate; alkoxy compounds such as sodium methoxide, sodium ethoxide, potassium methoxide, potassium ethoxide, potassium t-butoxide, calcium methoxide, calcium ethoxide, barium methoxide, barium ethoxide, tetraethoxytitanium, tetrabutoxytitanium, and tetra(2-ethylhexanoxy)titanium; acetylacetonate complexes such as lithium acetylacetonate, zirconia acetylacetonate, zinc acetylacetonate, dibutoxytin acetylacetonate, and dibutoxytitanium acetylacetonate; quaternary ammonium alkoxides such as tetramethylammonium methoxide, tetramethylammonium t-butoxide, and trimethylbenzylammonium ethoxide; dialkyltin compounds such as dimethyltin oxide, methylbutyltin oxide, dibutyltin oxide, and dioctyltin oxide; distannoxanes such as bis(dibutyltin acetate) oxide and bis(dibutyltin laurate) oxide; and dialkyltin dicarboxylates such as dibutyltin diacetate and dibutyltin dilaurate. These catalysts may be used singly or in combination of two or more types thereof.

In the (meth) acrylation reaction using (meth) acrylic acid as the compound (B) and the transesterification reaction using a (meth) acrylic acid ester, a solvent may be used. Examples thereof include aromatic compound solvents such as benzene, toluene, and xylene; aliphatic compound solvents such as hexane and heptane; alicyclic compound solvents such as cyclohexane; and ether compound solvents such as diisopropyl ether and dibutyl ether. These solvents may be used singly or in combination of two or more types thereof. The solvent to be adopted here is preferably a solvent that azeotropically boils with water generated through the reaction when the (meth)acrylation reaction is used, or a solvent that azeotropically boils with alcohol generated through the reaction when the transesterification reaction is used.

When the heating is performed, the heating temperature is not particularly limited, and may be appropriately selected depending on the compound (A) and the compound (B) to be used, but is preferably from 50 to 150°C, more preferably from 60 to 120°C, and still more preferably from 70 to 100°C from the viewpoint of suppressing coloring, suppressing polymerization, and improving productivity. When the heating is performed, the heating time is not particularly limited, but from the viewpoint of suppressing coloring, suppressing polymerization, and improving productivity, the time

from the time point at which the entire amounts of the compound (A) and the compound (B) are mixed to the completion of the reaction is preferably 24 hours or less, more preferably 12 hours or less, and still more preferably 8 hours or less. The above reaction may be performed under normal pressure or under increased pressure.

Through the above reaction, a reaction liquid containing the compound of the present disclosure is obtained. The reaction liquid contains, in addition to the compound of the present disclosure, a solvent used for the reaction, residues such as the compound (A) and the compound (B), catalyst residues, and the like. However. the compound of the present disclosure can be isolated by a known purification method. Examples of the purification method include washing with a basic aqueous solution, an acidic aqueous solution, or an aqueous sodium sulfate solution, and distilling off a light boiling component under reduced pressure.

According to the above-described production method, the compound of the present disclosure can be efficiently obtained. The obtained compound can be used as, for example, a polymerizable monomer (M) that is a raw material of the polymer (Pm), the resin particles (Pp), or the like of the present disclosure.

The present application claims the benefit of priority based on JP 2023-36778 filed on March 9, 2023. The entire content of the specification of JP 2023-36778 filed on March 9, 2023 is incorporated herein by reference.

Examples

The present invention will be described in more detail below by way of Examples, but the present invention is not limited to only these Examples. The term "parts" represents "parts by mass" and "%" represents "mass%" unless otherwise specified.

Measurement methods and evaluation methods are as follows.

Average particle size

As the average particle size of resin emulsion particles and a pigment, a value of an average particle size (hydrodynamic size) obtained by measuring a resin emulsion or a pigment dispersion as a measurement sample using a particle size distribution measuring instrument (available from OTSUKA ELECTRONICS CO., LTD., product number: nanoSAQLA) by a dynamic light scattering method, obtaining an autocorrelation function by a photon correlation method, and performing cumulant analysis was adopted.

Viscosity of ink

The ink obtained in each of Examples and Comparative Examples was measured with TPE-100 (available from Toki Sangyo Co., Ltd.) as an E-type viscometer with a rotor A24 at 0.8 degrees and 25°C.

PP adhesion 1

Base material: Polypropylene (for automobiles) available from Standard Test Piece Co., Ltd.

Evaluation method: A test sample was cross-cut into a grid shape with a width of 2 mm, Cellotape (registered trademark) available from NICHIBAN Co., Ltd. was attached to the test sample in such a manner as to remove air, and the test sample was pressure-bonded with reciprocation for 10 times at 500 g. After the elapse of 1 minute, the tape was peeled off at 100 mm/sec, and the peeled area was evaluated on the average of N5.

PP adhesion 2

Evaluation was performed in the same manner as in PP adhesion 1 except that the base material was changed to a corona-treated OPP film (product number: FOR-AQ) available from FUTAMURA CHEMICAL CO., LTD. and a 2-mm width grid-shape crosscutting was not performed.

Determination Criteria

◎: No peeling was observed.
◦: Peeled area was less than 2%.
△: Peeled area was from 2 to 5%.
×: Peeled area was more than 5%.

Monomer production example

[Example 1-1]

A 300 ml separable flask equipped with a thermometer, a cooling tube, and a stirring bar was charged with 40 parts of methacrylic anhydride, 120 parts of Newcol 704 (emulsifier having a polycyclic phenyl group and a polyethylene oxide group and having no ionic group, available from Nippon Nyukazai Co., Ltd.), 0.9 parts of N,N-dimethylaminopyridine, 26 parts of triethylamine, 18 parts of toluene, and 0.005 parts of phenothiazine as a polymerization inhibitor. Thereafter, the obtained solution was stirred at 120°C for 3 hours to allow reaction to proceed. After completion of the reaction, the reaction solution was washed twice with 40 parts of 5 wt% aqueous sodium hydroxide solution and twice with 40 parts of 20 wt% aqueous sodium sulfate solution, and the light boiling fraction was distilled off from the obtained organic phase to produce 122 parts of a pale yellow transparent liquid as a monomer (1), i.e., 122 parts of the monomer (1) in the form of a pale yellow transparent liquid.

[Example 1-2]

A monomer (2) was produced in the same manner as in Example 1-1 except that 120 parts of Newcol 704 was changed to 120 parts of Newcol 707 (emulsifier having a polycyclic phenyl group and a polyethylene oxide group and having no ionic group, available from Nippon Nyukazai Co., Ltd.).

[Example 1-3]

A monomer (3) was produced in the same manner as in Example 1-1 except that 120 parts of Newcol 704 was changed to 120 parts of Neugen EA167 (emulsifier having a polycyclic phenyl group and a polyethylene oxide group and having no ionic group, available from DKS Co. Ltd.).

[Example 1-4]

A monomer (4) was produced in the same manner as in Example 1-1 except that 120 parts of Newcol 704 was changed to 120 parts of EMULGEN A-60 (emulsifier having a distyrenated phenol group as a polycyclic phenyl group and a polyethylene oxide group and having no ionic group, available from Kao Corporation).

The absolute value of the zero-point energy of the structure molecule (4) represented by Formula (2-1-a), the absolute value of the zero-point energy of the propylene octamer, and the absolute value of the zero-point energy of the association of the structure molecule (4) and the propylene octamer were obtained by a calculation method applying B3LYP as a functional of a density functional method, 6-31G(d, p) as a basis function, and dispersion force correction (GD3BJ keyword) using a Gaussian 16 program available from Gaussian Inc. Then, the difference obtained by subtracting the absolute value (5925708 kJ/mol) of the zero-point energy of the association of the structure molecule (4) and the propylene octamer from the sum of the absolute value (3343411 kJ/mol) of the zero-point energy of the structure molecule (4) and the absolute value (2582206 kJ/mol) of the zero-point energy of the propylene octamer was -91 kJ/mol.

[Chem. 18]

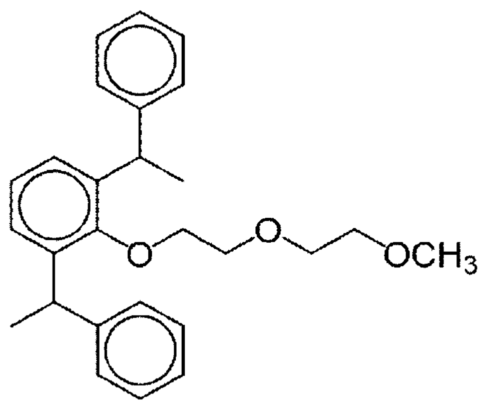

(2-1-a)

[Comparative Example 1-1]

A monomer (5) was produced in the same manner as in Example 1-1 except that Newcol 704 was changed to Nonipol 200 (emulsifier having a nonylphenyl group and a polyethylene oxide group and having no ionic group, available from Sanyo Chemical Industries, Ltd.).
The absolute value of the zero-point energy of the structure molecule (5) represented by Formula (2-1-b), the absolute value of the zero-point energy of the propylene octamer, and the absolute value of the zero-point energy of the association of the structure molecule (5) and the propylene octamer were obtained by a calculation method applying B3LYP as a functional of a density functional method, 6-31G(d, p) as a basis function, and dispersion force correction (GD3BJ keyword) using a Gaussian 16 program available from Gaussian Inc.
Then, the difference obtained by subtracting the absolute value (5228482 kJ/mol) of the zero-point energy of the association of the structure molecule (5) and the propylene octamer from the sum of the absolute value (2646200 kJ/mol) of the zero-point energy of the structure molecule (5) and the absolute value (2582206 kJ/mol) of the zero-point energy of the propylene octamer was -76 kJ/mol.

[Chem. 19]

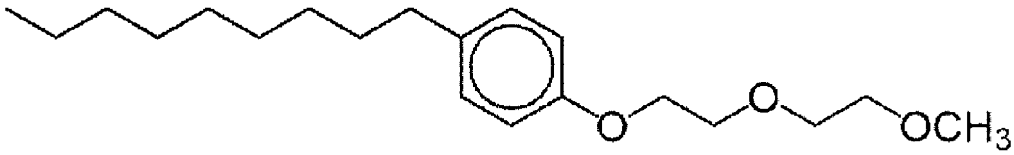

(2-1-b)

[Comparative Example 1-2]

A monomer (6) was produced in the same manner as in Example 1-1 except that Newcol 704 was changed to EMULGEN 404 (emulsifier having an oleyl group and a polyethylene oxide group and having no ionic group, available from Kao Corporation).

[Comparative Example 1-3]

Antox MS-60 (available from Nippon Nyukazai Co., Ltd.) was provided as a monomer having a polycyclic phenyl group and a polyethylene oxide group and having an ionic group in the polycyclic phenyl group.

Emulsion production example

[Example 2-1]

A flask equipped with a dropping funnel, a stirrer, a nitrogen gas inlet tube, a thermometer, and a reflux condenser was charged with 355 parts of deionized water. A first stage dropping pre-emulsion containing 98 parts of deionized water, 32 parts of a 25% aqueous solution of an emulsifier [available from ADEKA CORPORATION, trade name: ADEKA REASOAP SR-10], 152 parts of cyclohexyl methacrylate, 44 parts of 2-ethylhexyl acrylate, and 4 parts of acrylic acid was prepared in the dropping funnel, 13 parts of the pre-emulsion, corresponding to 4% of the total amount of the pre-emulsion, was added to the flask, the temperature was raised to 70°C while gently blowing nitrogen gas into the flask, and 12 parts of 5% aqueous ammonium persulfate solution was added to initiate polymerization. Thereafter, the remainder of the dropping pre-emulsion was uniformly added dropwise into the flask over 120 minutes. After completion of the dropwise addition, the content of the flask was maintained at 70°C for 60 minutes, and subsequently, a second stage dropping pre-emulsion containing 98 parts of deionized water, 32 parts of a 25% aqueous solution of an emulsifier [available from ADEKA CORPORATION, trade name: ADEKA REASOAP SR-10], 71.6 parts of cyclohexyl methacrylate, 44 parts of 2-ethylhexyl acrylate, 4 parts of acrylic acid, and 80 parts of the monomer (1), and 12 parts of 5% aqueous ammonium persulfate solution were uniformly added dropwise to the flask over 120 minutes. After completion of the dropwise addition, the content of the flask was maintained at 70°C for 60 minutes, the pH was adjusted to 8 by adding 25% aqueous ammonia, and the polymerization was terminated. The obtained reaction liquid was cooled to room temperature and then filtered with a 300 mesh wire net to produce an emulsion (1) as an aqueous dispersion.
The obtained aqueous dispersion contained a polymer, the polymer was resin emulsion particles, and the resin

emulsion particles were emulsion particles having a two-layer structure having an inner layer and an outer layer. The content of the non-volatile component in the aqueous dispersion (emulsion (1)) was 40%, the average particle size of the resin emulsion particles was 200 nm, the proportion of the constituent unit derived from the monomer (1) in the total of all the polymers as the non-volatile component was 20%, and the proportion of the constituent unit derived from the monomer (1) in the polymer constituting the outer layer was 40%.

[Example 2-2]

An emulsion (2) was produced in the same manner as in Example 2-1 except that 8 parts of the monomer (1) and 72 parts of cyclohexyl methacrylate were used instead of 80 parts of the monomer (1).

The obtained emulsion (2) contained a polymer, the polymer was resin emulsion particles, and the resin emulsion particles were emulsion particles having a two-layer structure having an inner layer and an outer layer. The content of the non-volatile component in the emulsion (2) was 40%, the average particle size of the resin emulsion particles was 200 nm, the proportion of the constituent unit derived from the monomer (1) in the total of all the polymers as the non-volatile component was 2%, and the proportion of the constituent unit derived from the monomer (1) in the polymer constituting the outer layer was 4%

[Example 2-3]

An emulsion (3) was produced in the same manner as in Example 2-1 except that 80 parts of the monomer (2) was used instead of 80 parts of the monomer (1).

The obtained emulsion (3) contained a polymer, the polymer was resin emulsion particles, and the resin emulsion particles were emulsion particles having a two-layer structure having an inner layer and an outer layer. The content of the non-volatile component in the emulsion (3) was 40%, the average particle size of the resin emulsion particles was 200 nm, the proportion of the constituent unit derived from the monomer (2) in the total of all the polymers as the non-volatile component was 20%, and the proportion of the constituent unit derived from the monomer (2) in the polymer constituting the outer layer was 40%

[Example 2-4]

An emulsion (4) was produced in the same manner as in Example 2-1 except that 80 parts of the monomer (3) was used instead of 80 parts of the monomer (1).

The obtained emulsion (4) contained a polymer, the polymer was resin emulsion particles, and the resin emulsion particles were emulsion particles having a two-layer structure having an inner layer and an outer layer. The content of the non-volatile component in the emulsion (4) was 40%, the average particle size of the resin emulsion particles was 200 nm, the proportion of the constituent unit derived from the monomer (3) in the total of all the polymers as the non-volatile component was 20%, and the proportion of the constituent unit derived from the monomer (3) in the polymer constituting the outer layer was 40%.

[Example 2-5]

An emulsion (5) was produced in the same manner as in Example 2-1 except that 80 parts of the monomer (4) was used instead of 80 parts of the monomer (1).

The obtained emulsion (5) contained a polymer, the polymer was resin emulsion particles, and the resin emulsion particles were emulsion particles having a two-layer structure having an inner layer and an outer layer. The content of the non-volatile component in the emulsion (5) was 40%, the average particle size of the resin emulsion particles was 200 nm, the proportion of the constituent unit derived from the monomer (4) in the total of all the polymers as the non-volatile component was 20%, and the proportion of the constituent unit derived from the monomer (4) in the polymer constituting the outer layer was 40%.

[Comparative Example 2-1]

An emulsion (6) was produced in the same manner as in Example 2-1 except that 80 parts of cyclohexyl methacrylate was used instead of 80 parts of the monomer (1).

The obtained emulsion (6) contained a polymer, the polymer was resin emulsion particles, and the resin emulsion particles were emulsion particles having a two-layer structure having an inner layer and an outer layer. The content of the non-volatile component in the emulsion (6) was 40%, and the average particle size of the resin emulsion particles was 200 nm.

[Comparative Example 2-2]

An emulsion (7) was produced in the same manner as in Example 2-1 except that 80 parts of the monomer (5) was used instead of 80 parts of the monomer (1).

The obtained emulsion (7) contained a polymer, the polymer was resin emulsion particles, and the resin emulsion particles were emulsion particles having a two-layer structure having an inner layer and an outer layer. The content of the non-volatile component in the emulsion (7) was 40%, and the average particle size of the resin emulsion particles was 200 nm.

[Comparative Example 2-3]

An emulsion (8) was produced in the same manner as in Example 2-1 except that 80 parts of the monomer (6) was used instead of 80 parts of the monomer (1).

The obtained emulsion (8) contained a polymer, the polymer was resin emulsion particles, and the resin emulsion particles were emulsion particles having a two-layer structure having an inner layer and an outer layer. The content of the non-volatile component in the emulsion (8) was 40%, and the average particle size of the resin emulsion particles was 200 nm.

[Comparative Example 2-4]

An emulsion (9) was produced in the same manner as in Example 2-1 except that 80 parts of Antox MS-60 was used instead of 80 parts of the monomer (1).

The obtained emulsion (9) contained a polymer, the polymer was resin emulsion particles, and the resin emulsion particles were emulsion particles having a two-layer structure having an inner layer and an outer layer. The content of the non-volatile component in the emulsion (9) was 40%, and the average particle size of the resin emulsion particles was 200 nm.

Pigment dispersion production example

A pigment dispersion (1) having a pigment content of 55% was produced by dispersing 5 parts of Discoat N-14 (available from DKS Co., Ltd.) as a dispersant, 6 parts of propylene glycol, 70 parts of deionized water, and 100 parts of titanium oxide CR-95 (available from Ishihara Sangyo Kaisha, Ltd.) with zirconia beads having a particle size of 0.5 mm filled at a volumetric rate of 50% by using a bead mill. The average particle size of the pigment was 330 nm.

Ink production example

[Example 3-1]

Preparation of Ink

An ink (1) was produced by mixing 25 parts of the emulsion (1) (10 parts as emulsion particles), 27.3 parts of the pigment dispersion (1) (15 parts as a pigment), 2 parts of diethylene glycol monobutyl ether, 15 parts of propylene glycol, 0.3 parts of KF-6011 (available from Shin-Etsu Chemical Co., Ltd.) as a surfactant, and 30.4 parts of deionized water, and filtering the mixture through a filter having a pore size of 1 μm (MCP-1-C10S, available from ADVANTEC). The viscosity of the ink (1) was 7 mPa·s.

Image Formation by Inkjet Method

The ink (1) obtained as described above was introduced into a textile printer MMP-TX13 available from MASTERMIND CO., LTD., and nozzle check printing (all 180 nozzles were sequentially caused to eject ink to print ruled lines) was performed to confirm that the ink was ejected from all the nozzles. Subsequently, solid printing of 1440 dpi × 1440 dpi, printing speed setting 1, and 50 mm × 50 mm was performed on each base material to form an image on the base material. The base material on which the image was formed was subjected to a heating treatment with a hot air dryer at 80°C for 10 minutes to form a test sample on which the image was printed. Each test sample was subjected to PP adhesion evaluation 1 and PP adhesion evaluation 2. The results are shown in Table 1.

[Examples 3-2 to 3-5 and Comparative Examples 3-1 to 3-4]

Each of the inks of Examples 3-2 to 3-5 and Comparative Examples 3-1 to 3-4 was prepared, and an image was formed in the same manner as in Example 3-1 except that 25 parts of the emulsion shown in Table 1 was used instead of 25 parts of the emulsion (1), and PP adhesion evaluation 1 and PP adhesion evaluation 2 were performed. The results are shown in Table 1. The viscosity of the ink obtained in each of these Examples and Comparative Examples was 7 mPa·s, and it was confirmed that the ink was ejected from all the nozzles through nozzle check printing.

[Table 1]

| | Example | | | | | Comparative Example | | | |
|---|---|---|---|---|---|---|---|---|---|
| | 3-1 | 3-2 | 3-3 | 3-4 | 3-5 | 3-1 | 3-2 | 3-3 | 3-4 |
| Emulsion | (1) | (2) | (3) | (4) | (5) | (6) | (7) | (8) | (9) |
| PP Adhesion 1 | ◎ | ◎ | ○ | △ | △ | × | × | × | × |
| PP Adhesion 2 | ◎ | ◎ | ◎ | ○ | ○ | × | × | × | × |

[Referential Example 1]

Through a calculation method in which B3LYP was applied as a functional of a density functional method, 6-31G(d, p) was applied as a basis function, and dispersion force correction (GD3BJ keyword) was applied using a Gaussian 16 program available from Gaussian, Inc., a difference was obtained by subtracting the absolute value of the zero-point energy of the association of the propylene hexamer and the propylene octamer from the sum of the absolute value of the zero-point energy of the propylene hexamer and the absolute value of the zero-point energy of the propylene octamer. The difference was -65 kJ/mol.

[Referential Example 2]

Through a calculation method in which B3LYP was applied as a functional of a density functional method, 6-31G(d, p) was applied as a basis function, and dispersion force correction (GD3BJ keyword) was applied using a Gaussian 16 program available from Gaussian, Inc., a difference was obtained by subtracting the absolute value of the zero-point energy of the association of dodecane and the propylene octamer from the sum of the absolute value of the zero-point energy of the dodecane and the absolute value of the zero-point energy of the propylene octamer. The difference was -51 kJ/mol.

Industrial Applicability

The polymer of the present invention is excellent in adhesion to a polyolefin base material. Thus, the polymer of the present invention is preferably used for an ink used for printing on a polyolefin film such as OPP or CPP; an ink used for printing on a fabric made of polyolefin fibers such as polyethylene fibers or polypropylene fibers; an ink or primer used for printing on a polyolefin molded article such as a polyethylene plate or a polypropylene plate; and the like.

## Claims

**1.** A polymer comprising, as a constituent unit, a structure derived from a polymerizable monomer (M) represented by Formula (1) described below:
[Chem. 1]

$$A^1\text{-}(OA^2)_n\text{-}O\text{-}X^1 \qquad (1)$$

[wherein

$A^1$ represents a hydrocarbon group containing two or more aromatic ring skeletons, the hydrocarbon group optionally has a substituent, and the substituent is a nonionic substituent,
$A^2$ represents an alkylene chain having from 1 to 10 carbons, the alkylene chain optionally has a substituent, and a plurality of $A^2$ may be the same or different,

n is an integer of from 3 to 100, and
$X^1$ represents a group having an ethylenically unsaturated double bond].

**2.** The polymer according to claim 1, wherein $A^1$ is any of groups represented by Formulae (1-a) to (1-f) described below:

[Chem. 2]

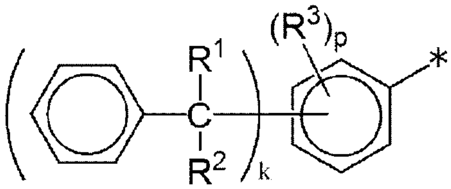

(1-a)

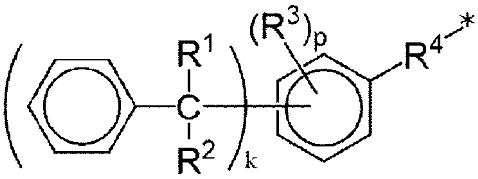

(1-b)

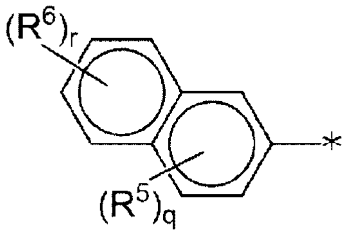

(1-c)

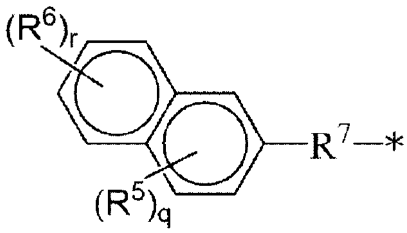

(1-d)

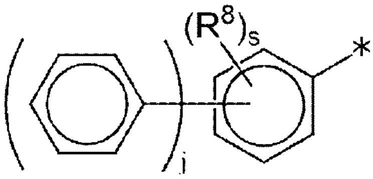

(1-e)

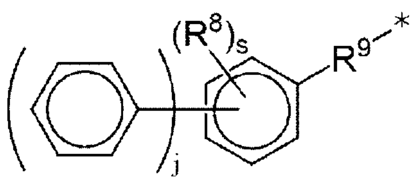

(1-f)

[wherein

$R^1$ and $R^2$ each independently represent a hydrogen atom or a monovalent aliphatic hydrocarbon group,
$R^3$, $R^5$, $R^6$, and $R^8$ each independently represent a monovalent aliphatic hydrocarbon group,
$R^4$, $R^7$, and $R^9$ each independently represent a divalent aliphatic hydrocarbon group,
k represents an integer of from 1 to 5, p represents an integer of from 0 to 4, and k + p is an integer of from 1 to 5,
q represents an integer of from 0 to 3, and r represents an integer of from 0 to 4,
s represents an integer of from 0 to 4, j represents an integer of from 1 to 5, and s + j is an integer of from 1 to 5, and
* represents a binding site with terminal O (oxygen atom) in "$(OA^2)_n$" in Formula (1)].

**3.** The polymer according to claim 1, wherein the structure derived from the polymerizable monomer (M) satisfies Formula (f1-1) described below:

$$(E_M + E_{P8}) - (E_{MP}) < -80 \text{ kJ/mol} \quad \text{(f1-1)}$$

[wherein

$E_M$ is an absolute value of a zero-point energy of a structure molecule (Ip), $E_{P8}$ is an absolute value of a zero-point energy of a propylene octamer, and $E_{MP}$ is an absolute value of a zero-point energy of an association of the structure molecule (Ip) and the propylene octamer,
the structure molecule (Ip) has a structure represented by Formula (1-1) described below when the polymerizable monomer (M) is represented by Formula (1),
each zero-point energy is a zero-point energy obtained by a calculation method applying B3LYP as a functional of a density functional method, 6-31G(d, p) as a basis function, and dispersion force correction (GD3BJ keyword) using a Gaussian 16 program available from Gaussian Inc.]
[Chem. 3]

$$A^1\text{-}(OA^2)_2\text{-}OCH_3 \quad \text{(1-1)}$$

[wherein $A^1$ and $A^2$ are the same as $A^1$ and $A^2$ in Formula (1), respectively].

**4.** Resin particles comprising the polymer described in claim 1.

**5.** The resin particles according to claim 4, wherein the resin particles are single-layer particles containing the polymer, or particles having a core-shell structure containing the polymer in a shell layer.

**6.** An aqueous dispersion comprising the resin particles described in claim 4.

**7.** An ink comprising a binder and a solvent, wherein the binder contains the polymer described in claim 1.

**8.** The ink according to claim 7, wherein the binder is resin particles containing the polymer.

**9.** A method for producing a printed matter, the printed matter including an image printed on a base material, the method comprising an image formation step of forming an image by adhering the ink described in claim 7 to a base material.

**10.** An article with a fixed image in which an image containing a pigment and a resin is fixed to a part or a whole of a base material, wherein the resin contains the polymer described in claim 1.

**11.** A compound represented by Formula (2) described below:
[Chem. 4]

$$A^3\text{-}(OA^4)_m\text{-}O\text{-}X^2 \quad \text{(2)}$$

[wherein

$A^3$ represents a hydrocarbon group containing two or more aromatic ring skeletons, the hydrocarbon group optionally has a substituent, and the substituent is a nonionic substituent,
$A^4$ represents an alkylene chain having from 1 to 10 carbons, the alkylene chain optionally has a substituent, and a plurality of $A^4$ may be the same or different,
m is an integer of from 3 to 100, and
$X^2$ represents a group having an ethylenically unsaturated double bond].

**12.** The compound according to claim 11, wherein the compound satisfies Formula (f2-1) described below:

$$(E_M + E_{P8}) - (E_{MP}) < -80 \text{ kJ/mol} \quad \text{(f2-1)}$$

[wherein

$E_M$ is an absolute value of a zero-point energy of a structure molecule (I), $E_{P8}$ is an absolute value of a zero-point energy of a propylene octamer, and $E_{MP}$ is an absolute value of a zero-point energy of an association of the structure molecule (I) and the propylene octamer,
the structure molecule (I) has a structure represented by Formula (2-1) described below when the compound is represented by Formula (2),
each zero-point energy is a zero-point energy obtained by a calculation method applying B3LYP as a functional of a density functional method, 6-31G(d, p) as a basis function, and dispersion force correction (GD3BJ keyword) using a Gaussian 16 program available from Gaussian Inc.]
[Chem. 5]

$$A^3\text{-}(OA^4)_2\text{-}OCH_3 \qquad (2\text{-}1)$$

[wherein $A^3$ and $A^4$ are the same as $A^3$ and $A^4$ in Formula (2), respectively].

**13.** The compound according to claim 11, wherein $A^3$ is any of groups represented by Formulae (1-a) to (1-f) described below:

[Chem. 6]

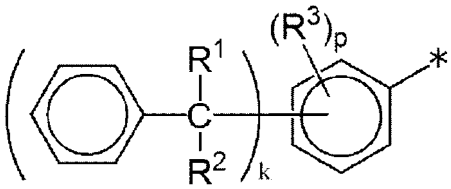

(1-a)

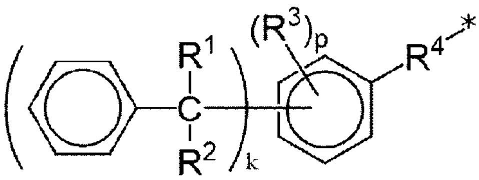

(1-b)

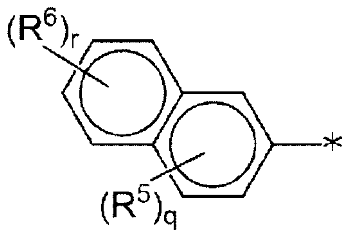

(1-c)

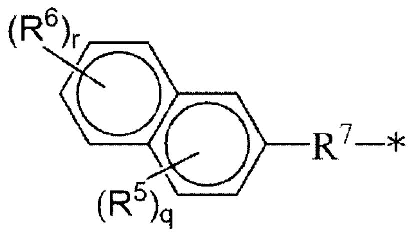

(1-d)

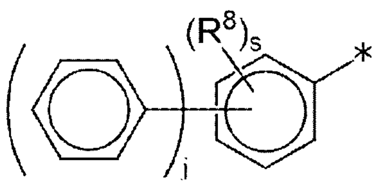

(1-e)

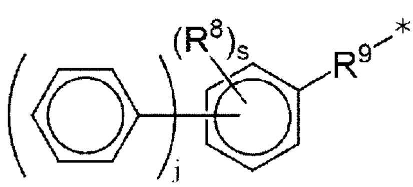

(1-f)

[wherein

$R^1$ and $R^2$ each independently represent a hydrogen atom or a monovalent aliphatic hydrocarbon group,
$R^3$, $R^5$, $R^6$, and $R^8$ each independently represent a monovalent aliphatic hydrocarbon group,
$R^4$, $R^7$, and $R^9$ each independently represent a divalent aliphatic hydrocarbon group,
k represents an integer of from 1 to 5, p represents an integer of from 0 to 4, and k + p is an integer of from 1 to 5,
q represents an integer of from 0 to 3, and r represents an integer of from 0 to 4,

s represents an integer of from 0 to 4, j represents an integer of from 1 to 5, and s + j is an integer of from 1 to 5, and * represents a binding site with terminal O (oxygen atom) in "$(OA^4)_m$" in Formula (2)].

## INTERNATIONAL SEARCH REPORT

International application No. **PCT/JP2024/008930**

### A. CLASSIFICATION OF SUBJECT MATTER

***C08F 290/06***(2006.01)i; ***B41J 2/01***(2006.01)i; ***C08F 12/12***(2006.01)i; ***C09D 11/023***(2014.01)i; ***C09D 11/30***(2014.01)i; ***C09D 11/102***(2014.01)i

FI: C08F290/06; B41J2/01 501; C08F12/12; C09D11/023; C09D11/102; C09D11/30

According to International Patent Classification (IPC) or to both national classification and IPC

### B. FIELDS SEARCHED

Minimum documentation searched (classification system followed by classification symbols)

C08F290/06; B41J2/01; C08F12/12; C09D11/023; C09D11/30; C09D11/102

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-039879 A (RICOH COMPANY, LTD.) 23 February 2017 (2017-02-23) claims, paragraphs [0028], [0041], examples | 1-13 |
| X | JP 2019-006975 A (RICOH COMPANY, LTD.) 17 January 2019 (2019-01-17) claims, paragraph [0032], examples | 1-13 |
| X | JP 1-210467 A (DAINICHISEIKA COLOR & CHEMICALS MFG. CO., LTD.) 24 August 1989 (1989-08-24) claims, p. 4, upper right column, line 17 to lower left column, line 1, p. 6, lower left column, lines 11-18, examples | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/008930**

| Patent document cited in search report | Publication date (day/month/year) | Patent family member(s) | Publication date (day/month/year) |
|---|---|---|---|
| JP 2017-039879 A | 23 February 2017 | (Family: none) | |
| JP 2019-006975 A | 17 January 2019 | US 2019/0264050 A1<br>claims, paragraph [0046], examples<br>EP 3530707 A1<br>CN 110194912 A | |
| JP 1-210467 A | 24 August 1989 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012201692 A
- JP 2013018951 A
- JP 2016222754 A
- JP 2023036778 A


### Non-patent literature cited in the description


- **J. BRANDRUP** ; **E. H. IMMERGUT**. POLYMER HANDBOOK THIRD EDITION. John Wiley & Sons, Inc., 1989
- POLYMER HANDBOOK